(19) Europäisches Patentamt / European Patent Office / Office européen des brevets

(11) **EP 3 572 870 B1**

(12) **EUROPEAN PATENT SPECIFICATION**

(45) Date of publication and mention
of the grant of the patent:
**26.01.2022 Bulletin 2022/04**

(21) Application number: **19176175.8**

(22) Date of filing: **23.05.2019**

(51) International Patent Classification (IPC):
*G02F 1/39* (2006.01)    *H04L 9/08* (2006.01)

(52) Cooperative Patent Classification (CPC):
**H04L 9/0855; G02F 1/39; H04L 9/0858**

(54) **METHOD FOR ENTANGLED PHOTON DISTRIBUTION WITH SPACE-DIVISION DE-MULTIPLEXING**

PHOTONENQUELLE ZUR ERZEUGUNG VERSCHRÄNKTER PHOTONEN

SOURCE DE PHOTONS POUR GÉNÉRER DES PHOTONS ENCHEVÊTRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2018 EP 18174171**

(43) Date of publication of application:
**27.11.2019 Bulletin 2019/48**

(73) Proprietor: **Österreichische Akademie der Wissenschaften**
**1010 Wien (AT)**

(72) Inventor: **STEINLECHNER, Fabian**
**1090 Wien (AT)**

(74) Representative: **Louis Pöhlau Lohrentz**
**Patentanwälte**
**Merianstrasse 26**
**90409 Nürnberg (DE)**

(56) References cited:
WO-A1-2016/168920    WO-A1-2017/062501
US-A1- 2014 099 104    US-B1- 6 430 345

• SAITOH KUNIMASA ET AL: "Multicore Fiber Technology", JOURNAL OF LIGHTWAVE TECHNOLOGY,, vol. 34, no. 1, 1 January 2016 (2016-01-01), pages 55-66, XP011598927, ISSN: 0733-8724, DOI: 10.1109/JLT.2015.2466444 [retrieved on 2016-02-12]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention concerns a method to provide entangled photon pairs by generation of entangled photon pairs in an entangled photon source by pumping a nonlinear crystal with a pump laser for parametric down-conversion, in particular spontaneous parametric down-conversion, in order to build a transmission channel, and a photon source for generating entangled photon pairs and distribution of the photon pairs with space-division de-multiplexing.

In the state of the art, photon sources for generating entangled photon pairs are well known. For example, the article "Multi-user distribution of polarization entangled photon pairs", arXiv:1510.06666v1, by J. Trapateau et al. (2015), discloses a multi-user distribution of polarization entanglement using commercial telecom wavelength division multiplexers, wherein the entangled photon pairs are generated from a broadband source based on SPDC. Herein the entangled photons are coupled into multiple wave guides on the basis of their different wavelengths and thus wavelength division multiplexing is accomplished.

Furthermore, the article "Experimental Demonstration of Four-Dimensional Photonic Spatial Entanglement between Multi-core Optical Fibres", doi:10.1038/s41598-017-04444-8, by H. J. Lee (2017), discloses the fiber transport of SPDC generated spatially entangled photonic quantum states through multi-core optical fibers and measurement of the entanglement between two fibers for a higher dimensionally entangled state, however not for space-division multiplexing (SDM). To transmit the higher dimensionally state a number of cores of the multi-core fibers are used, e.g. four cores are necessary in each fiber for a four dimensionally entangled photonic quantum state.

US6430345 B1 discloses the generation of an entangled photon pair and a following Mach-Zender interferometer. This document in the prior art, deals with the separation of two photons of one specific entangled photon pair.

Document WO 2016/168920 A1 - discloses a method for producing multipartite optical quantum states such as Greenberger-Horne-Zeilinger (GHZ) states. In such states one entangled photon is entangled with more than one other photon.

Document US 2014/0099104 A1 discloses a time-bin entangled photon source with a wavelength division demultiplexer to separate the signal and the idler photon of an entangled photon pair. In the transmission channel pump refresh stages are arranged. After the transmission a wave-division multiplexing is arranged.

An object of the present invention is to disclose a novel scheme for entangled photon generation and collection, which leads to a significantly improved efficiency and lower quantum bit error ratios applied to the aforementioned or other sources of entangled photons.

This object is achieved by the present invention by creating a method to provide entangled photon pairs comprising the steps of:

I) generation of entangled photon pairs in an entangled photon source by pumping a nonlinear crystal with a pump laser for parametric down-conversion, in particular spontaneous parametric down-conversion, whereas each entangled photon pair consists of two photons entangled in polarization and/or frequency and/or time, and the two photons of each entangled photon pair are correlated in their spatial mode profile,

II) space-division de-multiplexing the photons of the entangled photon pairs with a coupling means, in order to separate the entangled photon pairs and in order to separate the two photons of an entangled photon pair, whereas the coupling means assign and/or couple by space-division de-multiplexing each photon of an entangled photon pair to a separate optical interface, whereas the coupling means assign by space-division de-multiplexing each photon pair to a pair of optical interfaces, whereas the pair of optical interfaces for an entangled photon pair forms a transmission channel between two receivers,

III) distribution of photons of the entangled photon pairs with at least four separate optical interfaces in order to transmit the photons to at least two receivers, whereas at least two transmission channels, are formed between at least two receivers.

This object of the invention is also achieved by an apparatus of a photon source for generating entangled photon pairs and distribution of the photon pairs with space-division de-multiplexing comprising: a nonlinear crystal and a pump laser to pump the nonlinear crystal for parametric down-conversion, in particular spontaneous parametric down-conversion, to generate entangled photons pairs entangled in polarization and/or frequency and/or time, and whereby the two photons of each entangled photon pair are correlated in their spatial mode profile, and a coupling means for space-division de-multiplexing of the entangled photon pairs and the photons of the entangled photon pair, and whereas the coupling means assign by space-division de-multiplexing each photon of an entangled photon pair to a separate optical interface, at least four optical interfaces, whereas always two optical interfaces forming a pair of interfaces forming a transmission channel between two receivers, whereas at least two transmission channels are arranged between at least two receivers.

An advantage of the invention is to achieve an entangled photon source with a high brightness. That means with a higher number of generated and transmitted pairs per nanometer (nm) of generated bandwidth, and/or with high purity of the entangled state, visibility, and which is suitable for high-bit-rate quantum information processing and/or multi-user quantum communications.

Multiplexing is a technique widely used in classical communications to fulfill two essential tasks: On the one hand, multiple information-bearing signals can be combined (multiplexed) and transmitted together in parallel over a single transmission channel. The signals may then be separated at the receiver (demultiplexed) and processed independently. This results in an in increased information capacity, while keeping overall cost of deployment of the communication line low. Alternatively, de-multiplexing can be used to connect several users simultaneously via a single central transceiver, especially in free space communication.

Several physical properties can be employed for multiplexing. The most used in classical communication systems are wavelength-division-multiplexing (WDM), time-division multiplexing (TDM), and polarization multiplexing. The present invention uses space-division multiplexing (in the following called SDM) to increase the information capacity of transmission channels. In fiber communications, space-division multiplexing can be established by multiple spatially distinguishable transmission channels through a fiber transmission channel. In free-space communications, parallel spatial transmission channels can be realized as field-orthogonal transverse modes (e.g. OAM modes) or propagation in parallel displaced beam paths, or propagating under different angles.

The correlation of the two photons of each entangled photon pair in their spatial mode profile enables the space-division de-multiplexing of the photons. Preferably in addition, the two photons of each entangled photon pair can be entangled in their spatial mode profile.

The present invention leads to a significantly improved efficiency and lower quantum bit error ratios. Furthermore, the method allows for a higher total brightness over several spatial channels of a transmission line, whereby the brightness of a single channel remains at a level for which a high entanglement visibility of a source of entangled photons can still be maintained. The present invention achieves this by reducing the amount of undesirable multi-photon emission in a single channel of the transmission line (see also in the following) for a given total number of photon pairs using the additional discrimination of correlated pairs via conjugate spatial channels. Moreover, it can be used to build several entangled photon sources, using only a single nonlinear crystal and pump laser. In addition to improved cost effectiveness, these sources can be used in parallel, to achieve high-bit-rate quantum communications between a sender and two receivers, or - alternatively - for the distribution of entanglement amongst many users in a quantum access network. The method described herein uses the correlation of the spatial modes, and/or the anti-correlation of the momentum modes of photons generated by (S)PDC to couple them pair-wise into different optical interfaces, preferably different momentum modes or spatial modes of a transmission channel, or multiple transmission channels, wherein each of these transmission channels can carry one or multiple momentum and/or spatial modes. Additionally, each of these transmission channels could carry multiple frequency, temporal (waveform), and/or polarization modes, or modes of any other degree of freedom that can be used to encode quantum information. This quantum information can also be referred to as qubits or qudits.

Space division multiplexing (SDM) using e.g. multi-core or multi-mode fibers can be an addition to wavelength division multiplexing (WDM) that can be used to increase the total data capacity of an optical communication link. In particular, SDM can be used to further enhance transmission channels that already use WDM. Thus, the invention, which can be roughly understood to perform space division de-multiplexing of the output of an entangled photon source, can also be implemented in combination to a system using WDM (or, rather, wavelength demultiplexing). Furthermore, state-of-the-art WDM systems are prone to photon loss, which limits their applicability in the single-photon regime. The main source of loss in an SDM system is imperfect alignment. Hence, very low photon loss can be attained by aligning the system precisely. Moreover, momentum and/or spatial modes can be directly used to encode quantum information in addition to the qubits stored in the polarization, temporal waveform (time-dependent phase and/or amplitude), photon number, and/or frequency of photons Such measurements would be difficult to achieve for wavelength encodings as they involve either frequency converters and/or ultra-fast detection. In addition, SDM can be used in applications that require a single operational wavelength. Many quantum applications, such as quantum teleportation or entanglement swapping require photons that are indistinguishable in wavelength. The entanglement swapping protocol is an indispensable part of a quantum repeater infrastructure, and more specifically all-optical quantum repeaters.

The bit rate in applications involving sources of entangled photon pairs is fundamentally limited by the detection of multiple photon pairs ("brightness" of the entangled photon source). As the average number of photon pairs per detected mode is increased, the emission of multiple photon pairs leads to so-called accidental coincidences (finite probability of emitting more than one photon pair in a given time window), which reduce the quality ("visibility" or purity) of the entangled two-photon state (measured by the "coincidence-to-accidental ratio" (CAR)) and finally the signal-to-noise ratio in an experiment or application. The minimum timing window is determined either by the speed of the detection electronics, or the coherence time of the photons themselves. The achievable timing window thus imposes a bound on the maximum achievable repetition rate in a quantum communication system.

The maximum repetition rate of quantum communications is related to the timing resolution of the receiving detection system. In the case of entangled photon pairs, the average temporal separation of two subsequent pair-emissions must exceed the timing resolution in order to be able to distinguish different pair unambiguously. In the case of SPDC, the average emission probability per timing resolution is limited to values well below 0.1 or by the saturation rate of the receiving single-photon detectors (whichever is more restrictive). This limits the maximum qubit rate in a quantum communication system. Two approaches may be used to overcome this limitation: i) to encode more information per photon pair - that is - to employ large alphabet, i.e. large-alphabet encoding; ii) to de-multiplex into several quantum transmission channels. The disclosed invention relates to the latter approach. Specifically, with regards to spatial correlations in SPDC, the disclosed invention considers the pair-wise correlations between SPDC modes as parallel transmission channels for space-division de-multiplexing, whereby quantum bits are encoded in the remaining degrees of freedom (polarization, temporal waveform). This is contrasted by the more challenging approach of directly encoding quantum information in spatial properties. For multiplexing, the primary technological challenge is to manage crosstalk between different channels and maintain low overall insertion loss. In contrast, by high-dimensional quantum communication using spatial properties, it is additionally required that coherence between a multitude of spatial modes be maintained.

To increase the bit rate, here a system is proposed using multiple transmission channels between multiple receivers. The detection is increased by multiple transmission channels and multiple detectors on the receiver side, overcoming the problem of accidental coincidences and photon detection losses by the dead time of a single detector. The accidental coincidences are reduced by a factor of N for a given total bit rate for N transmission channels. The advantage here is, that the de-multiplexing takes place by the source. I.e. the bit rate of each transmission channel between the receivers adds up to a total overall bit rate.

Here the term "nonlinear crystal" preferably refers to any second-order nonlinear material, i.e. the crystal may be any material with a second-order nonlinearity.

A variety of uses for entangled photons is known so far, in particular applications in the field of quantum cryptography and therein especially for Quantum Key Distribution. It is well known in the prior art that entangled photons can be generated by parametric down conversion (PDC) and more particularly by spontaneous parametric down-conversion (SPDC) in a nonlinear crystal, such as potassium titanyl phosphate or beta barium borate, when the nonlinear crystal is pumped by a pump laser. Photons generated in the PDC process can exhibit quantum correlations, in particular quantum entanglement.

Photonic entanglement is a particular form of quantum correlation that can be described via the excitation of modes of the electromagnetic field with photons. The concept of optical modes is fundamental to the description of emission and absorption processes, interference and coherence, as well as propagation and dispersion of light. Quite generally speaking, an optical mode may be characterized by an amplitude (phase and/or intensity) distribution that is a solution to the equations governing the propagation of light. The excitation of these modes describes the flow of energy and the transport of information, in particular quantum information, and well as quantum phenomena, such as quantum entanglement.

The modes of the electromagnetic field can be described by several variables, or degrees of freedom (DOF) of the electromagnetic field: frequency and/or time, position and/or momentum, and polarization.

Typically, optical phenomena are described in reference to a complete set of field-orthogonal fundamental modes of a particular optical system. A set of field-orthogonal modes is one that consists of pair-wise orthogonal modes, i.e. modes that may be distinguished from one another with, in principle, unit probability. For convenience, the fundamental modes are typically chosen as eigenmodes of propagation (modes that are invariant during propagation) or modes of a detection system. Note however, that due to linearity, a superposition of orthogonal modes is also a valid solution to the optical field equations, and may also be considered as a constituent mode of some other set of field-orthogonal modes, from which an orthogonal basis set may be constructed, for example, via a Gram-Schmidt orthogonalization process.

For example, a pure polarization state of a single photon may be fully described in terms of its amplitude distribution in a pair of orthogonal polarization modes. Typically, for the polarization of photons the two fundamental modes are chosen as the horizontal and vertical oscillations in a plane perpendicular to the propagation direction (defined in reference to some optical element, such as a polarizing beam splitter). However, any other linear combination of these fundamental modes may also be considered as a basis vector of some other mutually-orthogonal basis set, from which an orthogonal basis set may be constructed (for example, via a Gram-Schmidt orthogonalization process). For example, the linear diagonal polarization state may be interpreted as one such superposition, whereby the linear anti-diagonal polarization corresponds to its orthogonal basis vector.

In the context of this disclosure, we refer to a particular excitation of the electromagnetic field that can be distinguished from other excitations with sufficiently high probability as a 'mode'. For example, a spatial mode is defined by a spatial waveform that allows it to be distinguished from field-orthogonal spatial modes with high probability. Similarly, a temporal mode may be distinguished from other temporal modes via its temporal waveform.

In the following, we refer interchangeably to a quantum state of light and the excitations of the electromagnetic field representing this quantum state, as "photons". Quantum states of light may then be described via their amplitude and phase distribution over a set of field-orthogonal modes, and the occupancy of these modes with photons. In many instances the quantum state may be considered to have a quantum "wavefunction" in close analogy to a wavepacket or waveform in classical electromagnetism. This wavepacket or waveform can be described by the modal amplitudes (also mode function) and the number of excitations in each of these modes, i.e. the number of photons occupying each mode.

Quantum states of light may exhibit entanglement, which is a superposition of particular excitations of several optical modes. This entanglement can manifest itself in various degrees of freedom, including: momentum, position, polarization, time-dependent phase and/or amplitude (temporal waveform), position-dependent phase and/or amplitude (spatial waveform), frequency/energy spectrum, and photon number. Moreover, a quantum state of light can exhibit entanglement in several of these degrees of freedom simultaneously, known as hyper-entanglement.

In particular, for polarization-entanglement of photon pairs generated in SPDC numerous schemes have been proposed. In the case of collinear SPDC, two commonly used schemes to generate polarization entanglement are based on crossed crystals and non-degenerated wavelengths, or a bi-directionally pumped crystal in a Sagnac-loop. These schemes share the advantage that no active interferometric stabilization is required due to the common path configuration for down-converted and pump photons. Furthermore, using periodically poled crystals, they can be implemented in collinear, non-critically phase-matched configurations in materials with large nonlinear coefficients, which have led to some of the brightest high-visibility sources of polarization-entangled photons demonstrated to date.

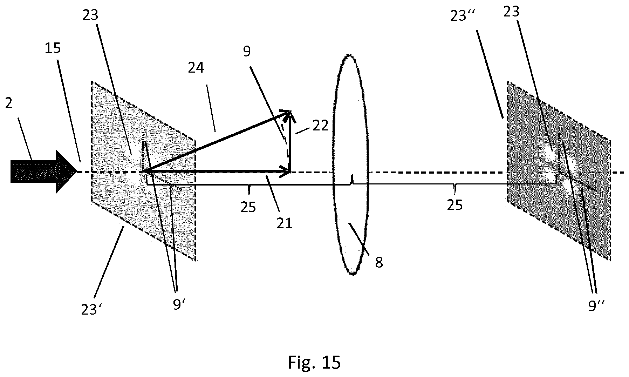

In a beam-like configuration the optical field is approximately localized about some preferential axis of propagation. Henceforth we may refer to the quantum state of light in such a scenario as a "photon beam" propagating along a particular optical axis. In a beam-like configuration, it is convenient to separate momentum and position coordinates into a longitudinal component along this axis and transverse component in a plane perpendicular to this axis (which will also be described in the context of Fig. 15). The degrees of freedom required to describe a photon beam are then the polarization, the transverse mode profile (which can be described in terms of an amplitude-dependence on transverse spatial coordinates or transverse momenta), and time and/or frequency, and the photon number. In a beam-like configuration the longitudinal momentum component is related to the time/frequency degree of freedom.

A transverse mode is described by a particular amplitude and phase distribution that can be expressed in terms of a position-dependent amplitude distribution in a certain plane perpendicular to the optical axis, e.g. in a basis $(x, y)$, or equivalently in terms of the two-dimensional Fourier transformed transverse wave vectors $(q\_x, q\_y)$ or transverse momentum vectors $(p\_x, p\_y)$ respectively. In the following we refer to transverse-position dependent amplitude and/or phase, as transverse spatial modes, and to transverse-momentum-dependent amplitude and/or phase, as transverse momentum modes - while implicitly keeping in mind that the representations of a beam-like quantum state of light via transverse momentum modes and transverse position modes may be related via an appropriate two-dimensional Fourier transform.

The position dependent amplitude in one particular plane is mapped to another, possibly different position dependent amplitude in another plane by means of an optical imaging system. Depending on the arrangement and focal lengths of e.g. lenses in this imaging system several tasks may be accomplished. For example, a single lens suffices to map the angle distribution (transverse momentum distribution) in one particular plane to positions in another plane. When a lens is located at a focal distance from each of the two planes (a so-called 2-f configuration), then the amplitude profile in the second plane corresponds to the transverse momentum profile in the first plane (scaled by some magnification factor).

Note that it may also be possible to define multiple optical axes, for example if a multitude of crystals are used to obtain spatially correlated pair generation (the pairs would originate from the same crystal). In cases where it is possible to define multiple optical axes, for example axis 1 with coordinates $(x1, y1)$ and axis 2 with coordinates $(x2, y2)$ we will henceforth refer to the jointly defined coordinates of the entire system $(x, y)$. We consider the photons to be emitted along distinct optical axes in a correlated manner as an embodiment of spatial correlations. Notice that, in the case where each of these optical axes can support a multitude of transverse momentum modes or transverse spatial modes itself, it may be more convenient to consider the Fourier transform relation for transverse position coordinates and transverse momentum for each of the optical axes independently. The optical axis is a property of the nonlinear crystal, which is preferably parallel for both photons of an entangled pair generated in the nonlinear crystal, because this is the most energy efficient. However, the optical axis can also be different for the two photons generated as an entangled pair in the nonlinear crystal.

If only one term such as "correlation" and "correlated" are used in a context, it will be understood that in most cases this term can refer to both, correlation and anti-correlation, depending on the respective domain, in particular to correlation in the spatial domain and anti-correlation in the transverse momentum domain. In general, the imaging system required to detect spatial correlations in a plane perpendicular to the optical axis, i.e. transverse position correlation, e.g. in a basis $(x, y)$, differs from that required to observe/exploit anti-correlation in the transverse momentum domain, e.g. in a basis of transverse wave vectors $(q\_x, q\_y)$. Typically, transverse modes are defined with respect to an optical axis, the angle is defined with respect to an axis along the preferential propagation direction of the photon beam emerging

5

from the nonlinear crystal. Below, in the context of Fig. 15, an example of a photon beam's transverse mode and a possible dependence of the amplitude on transverse position and/or angle with respect to the optical axis will be mentioned. The typical two-photon spatial mode function produced in (S)PDC with a weakly focused Gaussian pump beam exhibits anti-correlations in the transverse wave vector domain representing the far-field anti-correlations and correlations in the spatial domain representing the near-field correlations. Intuitively, the wave vector correlations can be understood by conservation of transverse momentum, i.e. the signal and idler photon's total momentum must be equal to that of the pump laser. The near field correlations figuratively spoken arise due to the fact that the photon pairs are produced at the same position in the crystal. In particular, correlations in the spatial domain can be observed using an optical system that maps the center of the nonlinear crystal to a detection plane in an image configuration/an image plane. These (anti-)correlations can also be expressed in terms of discrete mode decompositions, for example correlations in certain properties in Laguerre Gauss modes (e.g. orbital angular momentum conversation) or Hermite Gauss modes.

In a preferable embodiment for the method and the apparatus the coupling means comprises

- one or more optical lens/es and/or mirror/s and/or lens array/s in order to reshape and/or redirect and/or focus photons into the optical interfaces by space-division de-multiplexing, and/or
- one or more optical separation component/s with an intermodal dispersion in the spatial mode and/or the momentum mode in order to reshape and/or redirect photons into the optical interfaces by space-division de-multiplexing, preferably in combination with a wavelength mode dispersion, a temporal mode dispersion and/or a polarization mode dispersion, and/or
- one or more apertures or fibers in order to filter and/or redirect photons into the optical interfaces by space-division de-multiplexing, and/or
- one or more mode sorter/s and/or hologram/s in order to couple the photons into the optical interfaces by constructive interference of the mode at a particular position or by diffraction, and/or
- one or more photonic lantern in order to couple the photons into the optical interfaces by interference.

One or more lens/es and/or mirror/s and/or lens array/s in order to reshape and/or redirect and/or focus modes, which are incident under different angles to separate spots in the focal plane. An array of apertures (e.g. pinholes, or fibers) located in the focal plane can thus be used to sort photons according to their propagation angle.

Exemplary, the coupling means comprises a microlens array. A microlens array is a fixed arrangement of lenses that are small in relation to the complete arrangement and have similar optical properties, e.g. comprising an arrangement of seven or more lenses. The lenses are typically aligned in a well-defined manner (e.g. equidistant, symmetrical with respect to a defined center point) within a common carrier structure or plate. Use of a microlens array facilitates alignment with subsequent optical interfaces. Furthermore, the lenses can be gradient-index (GRIN) lenses. GRIN lenses are generally used to collimate or reimage the output of a fiber with a direct pigtailed connection. The GRIN lens focuses a beam due to varying indices in the lens, as opposed to e.g. aspheric lenses, where the focusing is accomplished using the difference in the refractive index between glass and air. Hence, GRIN lenses do not require an air gap to function.

Devices that allow separation of co-propagating orthogonal transverse spatial modes such as OAM or Hermite-Gauss modes, are called mode sorters. Mode sorters are based on interference of spatial modes and may be realized using programmable spatial light modulators or holographic elements. The main function of the holographic element in a mode sorter is to deflect orthogonal, but co-propagating spatial modes under different angles. Using in addition a lens these different deflection angles are then focused to separate positions in the focal plane. Note that the latter functionality of imaging to distinct spots in some plane may also be incorporated directly in the hologram. An array of detectors located in this plane will thus have one unique detector pixel associated with a particular spatial mode. In the case of fiber-coupled detectors, a fiber array is placed in the focal plane, where each fiber is connected to a unique detector. Preferably several holograms placed in sequence can be used. This results in lower insertion loss and reduced cross-talk.

A photonic lantern is an alternative device that allows for separation of spatial modes and uses interference between these modes to separate them into a multitude of single-mode fibers. Preferably this can be realized by fusing several single-mode fibers into a multi-mode fiber.

Preferably in addition to the spatial dependence, the splitting of modes can also be conditional on other properties of the photons. I.e. the spatial de-multiplexing can be combined with other forms of de-multiplexing, such as polarization de-multiplexing, time de-multiplexing, and/or frequency de-multiplexing. In these cases, the separation component with spatial mode dispersion is combined with a separation component that has a polarization mode dispersion and/or a wavelength dispersion and/or timing dependence (e.g. an optical switch). Moreover, it is possible for a single separation component to exhibit multiple forms of mode dispersion simultaneously.

For instance, the optical separation component is a hologram (e.g. a diffractive grating or lattice). The optical separation component may also additionally feature a polarization beam splitter or a dichroic mirror. For example, if the signal and the idler photon have non-equal wavelengths, they can be split using a dichroic mirror; if they have orthogonal polarization, they can be split using a polarization beam splitter. Thus, the photons are split according to a transverse momentum mode, a transverse spatial mode in addition to a polarization or frequency mode before the coupling means couples them into the optical interface.

Furthermore, one or more hologram(s) can be used to map modes to different paths, wherein the photon can be distinguished by some transverse momentum mode other than the emission angle or some transverse spatial mode other than the transverse position.

Examples for transverse spatial modes other than a particular transverse position may include: spatial modes in a superposition of multiple transverse positions, in particular Hermite-Gauss and Laguerre-Gauss modes. Examples of spatial modes other than transverse spatial modes include configurations in which no single optical axis may be conveniently defined (e.g. supermodes - that is eigenmodes of a coupled system of propagation modes). In the context of the disclosed invention, a correlated set of spatial intensity patterns (that is, incoherent additions of photons emerging from multiple spatial positions) shall also be included.

The optical separation component may be arranged optically downstream of a transmission line (e.g. waveguide or free-space link); this may also be the only optical separation component of the photon source. In particular it is preferred that additionally to the space-division de-multiplexing

- if the optical separation component is a dichroic mirror, furthermore the frequency; or
- if the optical separation component is a polarization beam splitter, furthermore the polarization; or
- if the optical separation component is a polarization beam splitter and a dichroic mirror, furthermore the frequency and the polarization; or
- if the optical separation component is a hologram, no further modes; or
- if the optical separation component is an optical switch, furthermore the temporal waveform

is used for space-division de-multiplexing.

In a preferred embodiment, the coupling means comprises one or more optical lenses for deflecting, in particular reshaping and/or redirecting, photons emitted from the nonlinear crystal. This embodiment is particularly preferred if the determining mode comprises the emission angle and/or transverse momentum of the photon. In an exemplary embodiment, there can be one lens or a curved mirror as coupling means or part of the coupling means that focuses photons into a respective optical interface, e.g. multiple transmission channels or paths, preferably a waveguide, according to their transverse momentum mode, in particular their emission angle, and/or their spatial mode, in particular their transverse position. In another exemplary embodiment, there can be a lens array as coupling means that focuses photons into a respective optical interface, e.g. multiple transmission channels or paths, preferably a waveguide, according to their transverse momentum mode, in particular their emission angle, and/or their spatial mode, in particular their transverse position.

In a preferred embodiment of the method and the apparatus the coupling means is configured such that a spatial mode and/or a momentum mode, in particular a transverse spatial mode and/or a transverse momentum mode, of a photon emitted from the nonlinear crystal determines whether the photon is coupled into one of the optical interfaces and into which optical interface the photon is coupled. Preferably the determination takes place due to the spatial mode correlation of the photons of a photon pair and/or the spatial correlation of the photon pairs and is achieved by the function of the coupling means as described before.

In a preferred embodiment, the coupling means comprises for each of the optical interfaces a coupling unit associated with said optical interface, wherein said coupling unit comprises at least one lens arranged for coupling photons into said optical interface. For example, the coupling units can be spatially arranged such that the emission angle of the photon determines, which coupling unit the photon reaches. Then, the coupling unit focuses the photon into the respective optical interface.

In an even more preferred embodiment of the aforementioned preferred embodiment, the lenses of at least two of the coupling units are arranged at different azimuth angles with respect to an optical axis of a photon beam emitted from the nonlinear crystal. Also, preferably, the lenses of the at least two of the coupling units are arranged at the same radius/polar angle with respect to an optical axis of a photon beam emitted from the nonlinear crystal. However, the lenses of the at least two of the coupling units can also be arranged at different radii/polar angles. This makes it possible to separate photons e.g. by their emission angle, including azimuth direction and/or deviation from the optical axis.

When a nonlinear crystal is used to split a pump beam into pairs of photons that, in accordance with the law of conservation of energy and law of conservation of momentum, have combined energies and momenta equal to the energy and momentum of the original photon and crystal lattice, are phase-matched in the frequency domain, and have correlated polarizations. The resulting entangled photon pairs have trajectories that are typically constrained to be within two cones, whose axes are arranged at some relative inclination to the pump beam. Also, due to the conservation of momentum, the two photons are always symmetrically located within the cones, relative to the pump beam. Importantly, the trajectories of the photon pairs may exist simultaneously in the two lines where the cones intersect. Thus, in a preferred embodiment the lenses of the coupling units associated with each of the two optical interfaces of each pair are arranged symmetrically with respect to an optical axis of at least one photon beam emitted from the nonlinear crystal. The symmetrical arrangement allows coupling each of the photons of an entangled pair into the respective optical interface of a pair of optical interfaces. I.e. photons belonging to a pair are assigned to a - corresponding - pair of optical interfaces.

Preferably for the method and the apparatus the optical interface comprises for fiber communication

- a waveguide, and/or
- a single mode fiber, and/or
- one distinct single-mode cores of a multi-core fiber (MCF), and/or
- a propagation mode of a few-mode fiber (FMF), and/or
- a group of propagation modes of a few-mode fiber (FMF), and/or
- a propagation mode of a multi-mode fiber (MMF), and/or
- a group of propagation modes of a multi-mode fiber (MMF), and/or
- a coupled-core fiber, and/or
- a photonic bandgap fiber and/or

for free-space communication a free space propagation means like

- a field-orthogonal transverse mode (e.g. OAM modes), and/or
- parallel displaced beam paths, and/or
- beam paths propagating under different angles.

Preferably for a free-space communication the before mentioned coupling means separate the photons and emit the photons into free-space links, i.e. parallel spatial transmission channels with different field-orthogonal transverse modes (e.g. OAM modes), and/or parallel displaced beam paths, and/or propagation under different angles.

A multi-mode fiber that does not mix (or at least not irreversibly mix) different spatial and/or transverse momentum modes allows the transmission of photons with a minimized amount of materials compared to several fibers. Moreover, each of these propagation modes can support quantum information encoded in the polarization and/or temporal mode and/or frequency mode and/or photon number to encode qubits. Finally, each optical interface may be a separate waveguide, e.g. a single-core optical fiber or one of several cores of a multi-core fiber. Dependent on the geometry and dispersion of the multi-mode fiber, the fiber-guided modes may also be classified into groups of modes, where the modes of one particular group do not couple, or couple weakly, to modes of other groups during propagation.

By "temporal waveform" is in particular understood a time-dependent amplitude, i.e. a wave packet. This wave packet can be described as a linear combination of temporal modes (in particular propagation invariant eigenmodes as temporal modes). However, every temporal waveform also defines a temporal mode (even if not propagation invariant).

Moreover, the optical interfaces may be waveguides and the at least four waveguides are part of a multi-core fiber. Multi-core fibers are usually cheaper than an array of individual fibers and can be shielded more cost-effectively. Additional to coupling the photon into the optical interface according to a spatial mode of said photon, the coupling means can also couple the photon into the optical interface according to the wavelength of the photon. Preferably, the coupling means comprises a microlens array and the optical interfaces a waveguide.

Preferably for the method and the apparatus, the space-division de-multiplexing assign the photons and the entangled photons pairs by the spatial mode and/or the momentum mode, in particular a transverse spatial mode and/or a transverse momentum mode, to the optical interfaces.

The disclosed invention can be realized by parallel channels as a combination of spatial modes and/or transverse momentum modes, in particular transverse spatial modes and/or transverse momentum modes. Each of the spatial modes and/or momentum modes may also support the transfer of additional photonic quantum information encoded in other degrees of freedom, such as the polarization, photon number, temporal waveform and/or spectral shape, so that vast amounts of quantum information can be transmitted simultaneously at a repetition rate that is determined by the source and detector bandwidth. (Here and in similar instances throughout this application, the sentence structure "A, B and/or C" has the same meaning as "at least one member from the group consisting of A, B, and C".) For example, the parallel channels can be a combination of mutually-orthogonal spatial, spectral, and polarization modes, over each of which photonic qubits can be transmitted simultaneously.

Preferably for the method and the apparatus, the space-division de-multiplexing assign the photons by the emission angle of the photons from the nonlinear crystal, and/or to position of the photon in a plane. Preferably, the transverse momentum mode comprises an emission angle of the photon from the nonlinear crystal generated by SPDC. The transverse momentum and spatial modes according to which the photon gets coupled into the optical interface includes in particular far-field transverse momentum anti-correlations and/or near-field spatial correlations. The angular spread (i.e. the spread of emission angles) and the preferred propagation direction of the emerging photon beam or emerging photon beams depend on the phase-matching characteristics of the nonlinear crystal or engineering a spatial structure on the nonlinear crystal. Consequently, the configuration of the coupling means is adapted to match the nonlinear crystal and its phase-matching characteristics.

Preferably for the method and the apparatus, between the entangled photon source and the coupling means a multi-mode fiber is arranged to transport photons with a spatial mode and/or the momentum mode, in particular a transverse spatial mode and/or a transverse momentum mode, to the coupling means.

Preferably for the method and the apparatus, the photons emitted from some or all of the separate optical interfaces are used for quantum communication, preferably Quantum Key Distribution, wherein particularly preferably at least two users receive photons from different optical interfaces of the at least four separate optical interfaces.

Preferably for the method and the apparatus, the pump laser operates at conditions where a mean pair rate per pulse or per coincidence window of the entangled photons is above 0.1, in particular above 0.2. A mean pair rate per pulse or per coincidence window above the particular value (e.g. 0.1 in particular 0.2) means here the average rate over all transmission channels together. The average rate of one transmission channel is given by the mean pair rate divided by the number N of transmission channels. Preferably leading for each transmission channels to a mean pair rate per pulse or per coincidence window of up to 0.05, in particular up to 0.1.

Preferably for the method and the apparatus, the pump laser operates at conditions where a mean pair rate per pulse or per coincidence window of the entangled photons per transmission channel is up to 0.05, in particular up to 0.1.

The bit rate in applications involving sources of entangled photon pairs is fundamentally limited by the detection of multiple photon pairs ("brightness" of the entangled photon source). As the average number of photon pairs per detected mode is increased, the emission of multiple photon pairs leads to so-called accidental coincidences (finite probability of emitting more than one photon pair in a given time window), which reduce the quality ("visibility" or purity) of the entangled two-photon state (measured by the "coincidence-to-accidental ratio" (CAR)) and finally the signal-to-noise ratio in an experiment or application. The minimum timing window is determined either by the speed of the detection electronics, or the coherence time of the photons themselves. The achievable timing window thus imposes a bound on the maximum achievable repetition rate in a quantum communication system.

With regard to the inventive method, the pump laser is preferably operated at conditions where a mean pair rate per pulse or per coincidence window is above 0.1, in particular above 0.2. Preferably leading for each transmission channels to a mean pair rate per pulse or per coincidence window of up to 0.05, in particular up to 0.1. This allows for a high bit-rate in the applications of the entangled photons and processing such high rates with reasonable signal-to-noise ratios is made possible by using (non-exclusively) the spatial mode and/or the transverse momentum mode into which optical interface the photon should be coupled, thereby resolving or disambiguating multi-photon pair situations (the likelihood that multi-photon pairs cannot be disambiguated because they are coupled to the same optical interfaces is essentially inverse proportional to the number of optical interfaces). Here the term "coincidence window" refers to the maximum timescale that is used to define a degree of simultaneity between two or more individual detection events. A small coincidence window is desirable, as it makes it possible to distinguish correlated SPDC photons from background noise. The minimum coincidence window that is set in an experiment is determined by either a) the timing jitter of the detectors; b) the synchronization between clocks used to tag the detection time of a photon or c) the correlation time of SPDC photons, which is related to the two-photon coherence time. For state-of-the-art detectors and timing electronics, a typical duration of a coincidence window is between 40 ps and 4 ns.

In a preferred embodiment, the at least four optical interfaces are grouped in at least two pairs of two optical interfaces, wherein the coupling means is configured to couple entangled photons emitted from the nonlinear crystal into optical interfaces belonging to the same pair. The signal and idler modes generated in a parametric generation process naturally exhibit a certain degree of anti-correlation in the transverse wave vector domain, i.e. the transverse momentum domain, and/or a certain degree of correlation in the spatial domain. Moreover, the photons can at the same time be entangled in the polarization, temporal waveform, or frequency domain. The spatial and/or transverse momentum correlations are utilized to couple the correlated photons pair-wise into N pairs of wave guiding structures. The correlations between signal and idler photons allow multiple photon pairs to be transmitted and processed in parallel, whereby accidental coincidences are reduced by a factor N for a given total bit rate. Thus, the present invention leads to a significantly improved efficiency and lower quantum bit error ratios.

Preferably, the photons of the entangled pair generated in the nonlinear crystal by (S)PDC are at least or only entangled in the polarization mode and it is determined by one or more of the remaining correlated degrees of freedom whether the photon emitted from the nonlinear crystal is coupled into one of the optical interfaces and into which optical interface the photon is coupled. That is, the coupling means is configured such that a spatial mode, and/or a momentum mode, in particular the transverse spatial mode and/or transverse momentum mode, of a photon emitted from the nonlinear crystal determines whether the photon is coupled into one of the optical interfaces and into which optical interface the photon is coupled. Thus, the entanglement in at least or only the polarization mode can be used for quantum communication, preferably Quantum Key Distribution.

Preferably, the coupling means is configured such that a spatial mode and/or a momentum mode, in particular a transverse spatial mode and/or a transverse momentum mode, of a photon emitted from the nonlinear crystal determines whether the photon is coupled into one of the optical interfaces and into which optical interface the photon is coupled and a use of such a photon source, wherein photons emitted from some or all of the separate optical interfaces are used for quantum communication, preferably Quantum Key Distribution, wherein particularly preferably at least two users receive photons from different optical interfaces of the at least four separate optical interfaces. Correspondingly, the above objective is achieved with a method as defined in the outset wherein photons are coupled into one of the at least four separate optical interfaces depending on a spatial mode and/or a momentum mode of said photon from the nonlinear crystal.

Preferably, the nonlinear crystal is arranged in a Sagnac loop, preferably a polarization Sagnac loop. In particular, the pump laser beam is split and the two resulting beams are made to follow substantially the same path but in opposite directions, wherein the nonlinear crystal is arranged such that the two beams reach and traverse the nonlinear crystal in substantially opposite directions.

In an even more preferred embodiment, the Sagnac loop comprises a polarization beam splitter in the optical path of a beam from the pump laser and (at least) two mirrors, wherein each of the two mirrors is arranged to receive one polarization component of the pump laser beam from the polarization beam splitter (PBS). Preferably, the nonlinear crystal is arranged optically between the two mirrors. Also preferably, a device for transforming the polarization to a polarization perpendicular to the original one, e.g. a half-wave plate or any other device inducing a phase shift of pi in the polarization component or rotating the polarization by 90°, is arranged in the Sagnac loop, in particular optically between one of the mirrors and the polarization beam splitter. This polarization flip, or rotation can be achieved using for example a half-wave retarder or a cross-faced periscope assembly or a Fresnel rhomb. Furthermore, a device for coupling the pump laser beam into the Sagnac loop and for coupling the signal/idler beam out of the Sagnac loop can be provided for, in particular a dichroic mirror. There can also be two dichroic mirrors provided for, wherein one acts to split the signal and the idler beam from the Sagnac loop and one acts to split the signal or idler beam and the pump beam, i.e. in particular one of the dichroic mirrors acts as the optical separation component mentioned above.

Implementing a Sagnac loop naturally factors the superimposed state of two, e.g. one clockwise and one counter-clockwise, pair-generation possibilities after the device splitting the pump laser beam, e.g. the PBS, into correlated spatial modes and a polarization-entangled state, wherein the photon pair could for instance be polarization entangled as |H>|V> (x) |V>|H>, wherein (x) refers to the direct product, |H> to a horizontally polarized photon state and |V> to a vertically polarized photon state. The Sagnac scheme thus produces a maximally polarization-entangled state, without the need for additional compensation steps. The relative phase of the entangled state can be set by adjusting the relative phase of the pump laser beam polarization. The relative phase of the entangled state may be mode dependent.

Preferably, the method and the apparatus are used for distributing a secure key to at least two receivers by means of Quantum Key Distribution.

Preferably, the photon source is used that the photons emitted from some or all of the separate optical interfaces are used for quantum communication, preferably Quantum Key Distribution, wherein particularly preferable at least two users receive photons from different optical interfaces of the at least four separate optical interfaces.

Furthermore, the invention comprises a method for distributing a secure key to at least two users by means of Quantum Key Distribution, wherein the photons are provided according to an above-mentioned method. As such the invention can provide a common list of random numbers to two users, which can be used as a secure key to transmit messages encrypted with classical, e.g. symmetrical, encryption methods tap-proof. Using the above-mentioned method to provide the at least two users with entangled photons leads to a much increased bit-rate and allows for multi-user quantum communication. Furthermore, it simplifies the operation and increases the long-term stability of such communication, as well as it reduces the number, cost and complexity of optical components required for a usual source for Quantum Key Distribution.

Referring now to the use (as described above) of a photon source according to any of its embodiments mentioned in this document, the present invention allows a particularly efficient quantum communication, in particular Quantum Key Distribution, and consequently high data rates in the information to be transmitted in an encrypted way.

Preferably, concerning the photon source used, the at least four optical interfaces are grouped in at least two pairs of two optical interfaces, wherein the coupling means is configured to couple entangled photons emitted from the nonlinear crystal into optical interfaces belonging to the same pair. Then it is advantageous that the photons emitted from some or all of the separate optical interfaces are used for Quantum Key Distribution and that one user receives photons from one member of at least one of the pairs of two optical interfaces and another user receives photons from the respective other member of the at least one of the pairs of optical interfaces. Accordingly, if there are N pairs of optical interfaces, the entangled photons are coupled pair-wise into one of the pairs, wherein the signal photon is coupled into the one and the idler photon is coupled into the other optical interface of the respective pair of optical interfaces. The correlations between signal and idler photons allow multiple photon pairs to be transmitted and processed in parallel, whereby accidental coincidences are reduced by a factor of N for a given total bit rate.

In a preferred embodiment of the above-mentioned method, at least one user receives photons from at least two of the four optical interfaces. That is, one user receives one member of each pair of photons generated by SPDC, whereas a different user or different users receive(s) the other member of each or some pairs. Using multiple optical interfaces for the same users (sender and receiver) increases the "bandwidth" for quantum communication between those users. On the other hand, if one "server" user has multiple optical interfaces (one of each pair) assigned to himself and the other respective optical interfaces are assigned to multiple different "client" users, the server may securely distribute information (e.g. a common encryption key) to all clients.

In a beam-like configuration, the two-photon spatial mode produced via (S)PDC can generally be expressed in the transverse wave vector domain as

$$|\Psi\rangle \sim \int dq_s dq_i \Phi(dq_s, dq_i)|q_s\rangle|q_i\rangle \qquad \text{(Eq. 1),}$$

where $|q\rangle$ denotes the quantum state of a photon with a transverse momentum component (cf. also Fig. 15).

Note, that for the sake of brevity we have omitted the additional entanglement that the photon pairs exhibit in the polarization, or temporal frequency domain (so-called hyperentanglement). In the case of (S)PDC in a bulk nonlinear crystal, the two-photon mode function of the SPDC field in the transverse wave vector domain can be expressed as

$$\Phi(dq_s, dq_i) \propto g(q_s + q_i)\, f\left(\Delta\, k_z(q_s, q_i), L\right) \qquad \text{(Eq. 2),}$$

where $f\left(\Delta\, k_z(q_s, q_i), L\right)$ denotes the phase-matching function, $L$ denotes the crystal length, $\Delta\, k_z(q_s, q_i)$ the longitudinal phase-mismatch, and $g(q_s + q_i)0$ describes the spatial mode profile of the pump beam.

In certain instances, it can be more practical to express the two-photon state in terms of a discrete set of orthogonal modes:

$$|\Psi\rangle \sim \sum_{n,m} \Phi_{n,m}|\text{n}\rangle_s|\text{m}\rangle_i \qquad \text{(Eq. 3),}$$

where

$$|\text{n}\rangle = \int dq\, U_n(q)|q\rangle$$

denotes the n-th mode of an orthogonal set of spatial modes $U_n(q)$ for the signal (idler) photon (e.g. plane wave, Laguerre Gauss, or Hermite Gaussian spatial modes), and $\Phi_{n,m}$ denotes the amplitude of the respective mode pair.

Alternatively, the spatial mode can be expressed, via 2-d Fourier transform, in terms of the spatial amplitude function of the spatial coordinates (x, y) in a plane perpendicular to the optical axis.

Furthermore, the pump laser and the nonlinear crystal can also be replaced by other sources of entangled photon pairs. The invention is not limited to a specific means of production of entangled photon pairs. Rather, it is based on the realization that - irrespective of the means of production - entangled photon pairs have correlated spatial and/or anti-correlated transverse momentum modes and multi-photon pairs may thus be differentiated or disambiguated (telling members of each pair apart) by separating them based on one or more of their modes (including position and/or emission angle).

An application of the invention can be found in the field of an improved encrypted data transfer between two or more stations with either free space transmission channels and/or fiber transmission channels.

In the following, the invention will be explained by way of preferred embodiments illustrated in the drawings, yet without being restricted thereto. In the drawings:

Fig. 1      is a schematic view of a photon source according to the present invention;
Fig. 2      is a schematic view of another embodiment of the photon source with a lens, hologram or curved mirror;
Fig. 2a     is a schematic view of another embodiment of the photon source showing the use of the transverse momentum and the spatial position of the photons for multiplexing;
Fig. 3      is a schematic view of another embodiment of the photon source with a lens array;
Fig. 3a     is a schematic view of another embodiment of the photon source with an imaging system and a lens array as a coupling means;
Fig. 4      is a schematic view of another embodiment of the photon source with an optical system and a pinhole array;
Fig. 4a     is a schematic view of another embodiment of the photon source with a lens, a lens array and a pinhole array;

Fig. 5        is a schematic view of another embodiment of the photon source with a prism, in which photons are split into multiple beams before coupling;

Fig. 6        is a schematic view of another embodiment of the photon source with a polarization beam splitter or a dichroic mirror, in which photons are split into multiple beams before coupling;

Fig. 6a       is a schematic view of another embodiment of the photon source showing the use of the transverse spatial position of the photons for multiplexing;

Fig. 7        is a schematic view of another embodiment of the photon source with holograms, in which modes are mapped to different paths;

Fig. 8        is a schematic view of another embodiment of the photon source with a multi-mode fiber;

Fig. 9        is a schematic view of another embodiment of the photon source, wherein the photons are separated and coupled into different optical interfaces after passing a multi-mode channel;

Fig. 10       schematically shows another embodiment of the present photon source with a microlens array as a coupling means;

Fig. 11       schematically shows another embodiment of the present photon source, wherein the optical interfaces are multiple cores of a tapered multi-core fiber and the coupling means comprises gradient-index lenses;

Fig. 12       schematically shows another embodiment of the photon source with a fiber-based wavelength division multiplexer;

Fig. 13       schematically shows another embodiment of the photon source with two pinholes;

Fig. 14a      schematically shows another embodiment of the photon source with a Sagnac loop;

Fig. 14b      schematically shows another embodiment of the photon source with a Sagnac loop and in particular an additional optical separation element compared to the embodiment of Fig. 14a;

Fig. 14c      schematically shows another embodiment of the photon source with a Sagnac loop using a periscope;

Fig. 15       illustrates the propagation of a transverse spatial mode and possible coordinate systems that can be used to define a position dependent amplitude in a transverse plane, or a transverse momentum distribution.

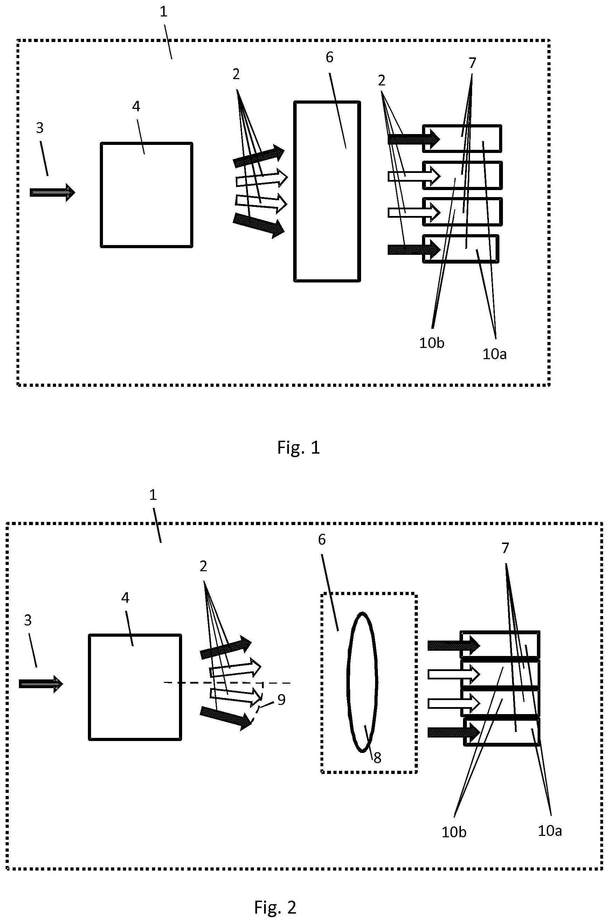

Fig. 1 illustrates the basic principle of the inventive photon source 1 for generating entangled photons 2. A pump laser 3 pumps a nonlinear crystal 4 and generates a stream of pairs of entangled photons 2, each pair comprising a signal and an idler photon. Two pairs of entangled photons 2 are depicted, wherein the photons 2 of one entangled pair (i.e. one pair of signal and idler photon) are depicted as filled arrows and the photons 2 of the other entangled pair as the contours of arrows. Next, a coupling means 6 (indicated as a general building block; see below embodiments for more detailed examples) couples the photons 2 emitted from the nonlinear crystal 4 into one of the at least four optical interfaces 7, wherein the coupling means 6 assign by space-division de-multiplexing each photon of an entangled photon pair to a separate optical interface (7). The coupling means 6 is configured such that a spatial mode and/or a transverse momentum mode of a photon 2 (see Eq. 1-3) determines whether the photon 2 is coupled into one of the optical interfaces 7 and into which optical interface 7 the photon 2 is coupled. The photons 2 are emitted from the entangled photon source 1 through the optical interfaces 7. The two optical interfaces 7 belonging to a pair 10a, 10b may be connected to two parties interested in a secure transmission channel, i.e. one interface 7 belonging to the pair 10a to a sender of a secure message and the other interface 7 belonging to the same pair 10a to a receiver of the secure message. In this manner, the entangled photons can be used for a quantum secure key exchange as described in the introduction above.

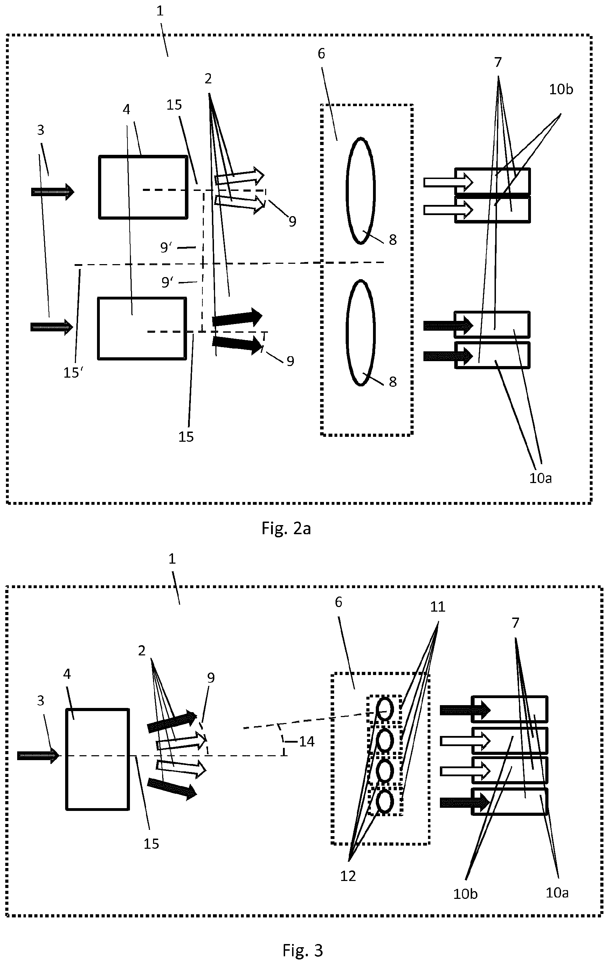

Fig. 2 shows an embodiment of the photon source 1, which implements (or realizes) the basic principle described in the context of Fig. 1. Herein, again the coupling means 6 assign and/or couple photons 2 into the optical interfaces 7, which in this embodiment are made up by multiple transmission channels or paths (indicated as optical waveguides), preferably one for each mode. The distinguishing mode in this embodiment is the transverse momentum mode, in particular the emission angle 9, i.e. the determination would be based on an anti-correlated mode. The coupling means could be a lens, which could also be replaced or complemented by a hologram or a curved mirror. Furthermore, the optical interfaces 7 are grouped in pairs 10a, 10b of two optical interfaces 7, wherein the coupling means 6 is configured to assign and/or couple entangled photons 2 emitted from the nonlinear crystal 4 into optical interfaces 7 belonging to the same pair 10a or 10b.

Fig. 2a shows an embodiment of the photon source 1, which implements (or realizes) the basic principle described in the context of Fig. 1. Herein, again the coupling means 6 to assign and/or couple photons 2 into the optical interfaces 7, which in this embodiment are made up by multiple transmission channels or paths (indicated as optical waveguides), preferably one for each mode. The distinguishing mode in this embodiment is the transverse momentum mode, in particular the emission angle 9, and the spatial mode, in particular the transverse position 9', i.e. the determination would be based on an anti-correlated and correlated modes. In this illustration, the transverse position 9' is a displacement from an optical axis 15' and the emission angle is defined with respect to another optical axis 15. Notice that these axes need not be parallel, as depicted in the figure. The coupling means 6 could be a lens system 8, which could also be replaced or complemented by a hologram or a curved mirror. Furthermore, the optical interfaces 7 are grouped in pairs 10a, 10b of two optical interfaces 7, wherein the coupling means 6 is configured to assign and/or couple entangled photons 2 emitted from the nonlinear crystal 4 into optical interfaces 7 belonging to the same pair 10a or 10b. The spatial correlation in this embodiment is achieved by pumping two nonlinear crystals 4 (each centered about a transverse position 9') whereby photons originate in pairs from one of two nonlinear crystals 4. This illustrates the basic principle of using a more generally structured nonlinear crystal 4 to achieve a particular spatial correlation of two or more photon beams. Furthermore, photon pairs emitted from each of the two nonlinear crystals 4 could be emitted with anti-correlated emission angles 9.

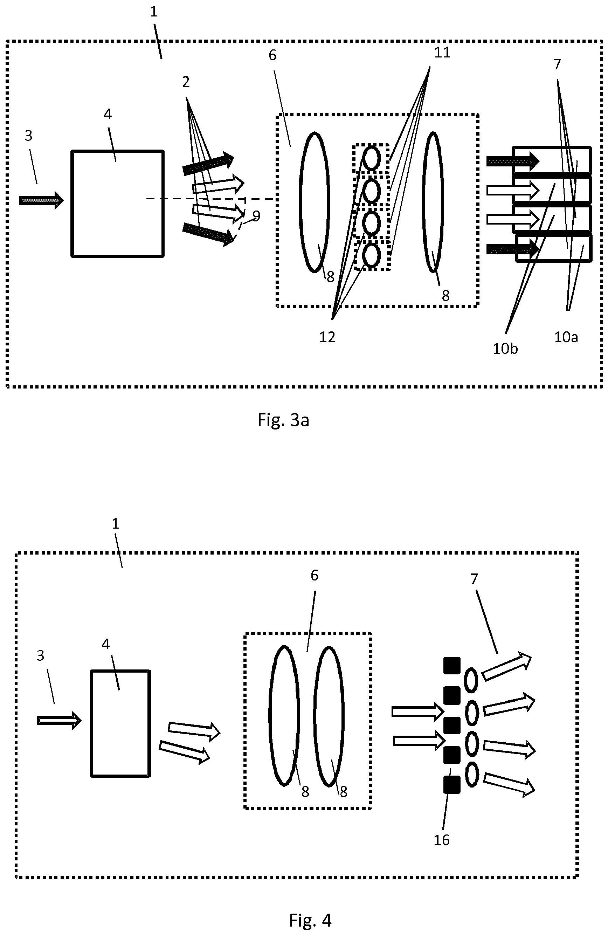

Fig. 3 shows yet another embodiment of the photon source 1, which implements the basic principle described in the context of Fig. 1. Herein, the coupling means 6 comprises for each of the optical interfaces 7 a coupling unit 11. Each coupling unit 11 comprises a lens 12. The lenses 12 of the coupling units 11 are arranged such that a transverse mode, e.g. the emission angle 9, of a photon 2 emitted from the nonlinear crystal 4 is assigned by space-division de-multiplexing to one of the optical interfaces 7. Thus, the coupling means 6 is a lens array in this embodiment that couples the photons 2 into a respective optical interface 7, which are grouped into pairs 10a, 10b, according to a spatial mode 5. Furthermore, the lenses 12 of two coupling units 11 are arranged at different azimuth angles (not represented in the present projection) and/or at different polar angles 14 with respect to an optical axis 15 of a photon beam 2 emitted from the nonlinear crystal 4. In particular, the lenses 12 of the coupling units 11 associated with a pair 10a, 10b of optical interfaces 7 are arranged symmetrically with respect to an optical axis 15 of a photon beam emitted from the nonlinear crystal 4. Particularly, the angle of the photons 2 leaving the nonlinear crystal 4 are not to scale. In the figures, there is always only one optical axis 15 displayed. However, as has been described above, it is possible that there are separate optical axes for two photons 2 of a pair generated in the nonlinear crystal.

Fig. 3a shows an embodiment of the photon source 1, which implements (or realizes) the basic principle described in the context of Fig. 1. Herein, again the coupling means 6 assigned by space-division de-multiplexing the photons 2 to one of the optical interfaces 7. Thus, the coupling means 6 in this embodiment couples the photons 2 into a respective optical interface 7, which in this embodiment are made up by multiple transmission channels or paths (indicated as optical waveguides), preferably one for each mode. The distinguishing mode in this embodiment is the transverse momentum mode, in particular the emission angle 9, i.e. the determination would be based on an anti-correlated mode. In this embodiment, the coupling means 6 comprises a collimation lens 8 followed by one (or more) microlens array(s), followed by another imaging system for further reshaping, e.g. (de-)magnification, of the photons. In this illustration, the imaging system consists of an additional lens 8, placed after the multi lens array. The optical interfaces 7 are grouped in pairs 10a, 10b and the coupling means 6 comprises coupling units 11 comprising one lens 12 each. The lenses 12 of the coupling units 11 associated with each of the two optical interfaces 7 of each pair 10a, 10b are arranged fixed in the respective microlens array symmetrically with respect to an optical axis 15 of the photon beam 2 emitted from the nonlinear crystal 4.

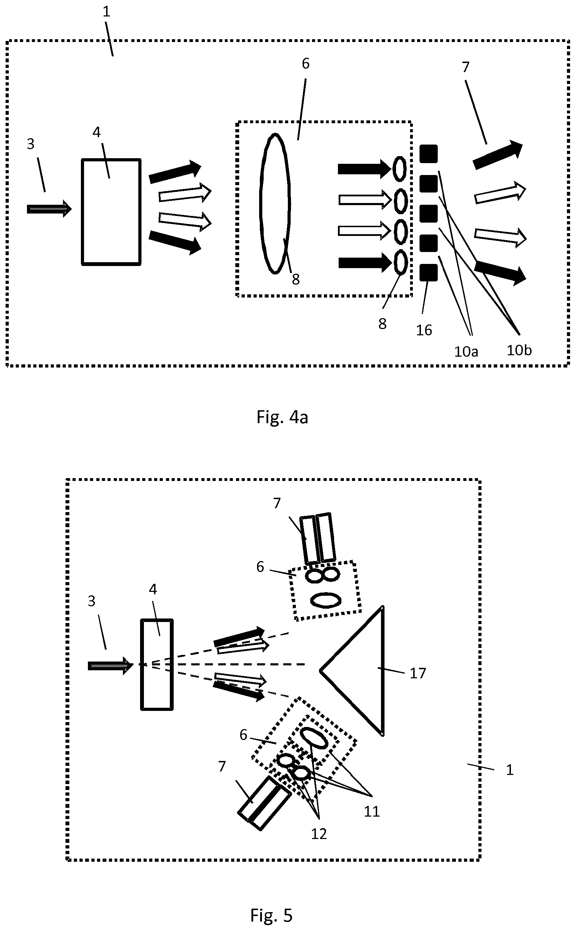

Fig. 4 shows yet another embodiment of the photon source 1, which implements the basic principle described in the context of Fig. 1. In this embodiment, the couplings means 6 is an optical system comprising two lenses 8 and four pinholes or apertures 16 that focus the photons 2 emitted from the nonlinear crystal 4 at the respective optical interface 7, which in this embodiment are made up by multiple transmission channels or paths. From there on the photons 2 are transmitted through a dedicated lens and over a free-space transmission channel. The free-space transmission channels are pair-wise correlated, where each pair is configured to transmit an idler photon over one channel and the corresponding signal photon over the other channel of the pair. The photons transmitted via free-space channels can for example be received by a detector in a satellite if they are sent from a photon source placed on Earth or on another satellite, or they can be received by a detector on Earth if they are sent from a photon source place on Earth or on a satellite. As is demonstrated by this example, the invention is not limited to transmission of the photon pairs over separate, confined waveguides. In particular, in this embodiment the determining mode can be the (correlated) (transverse) spatial mode.

Fig. 4a shows yet another embodiment of the photon source 1, which implements the basic principle described in the context of Fig. 1. In this embodiment, the couplings means 6 is an optical system comprising one lens 8 that collimates the photons 2 emitted from the nonlinear crystal 4 and a lens assembly at the respective optical interface 7. In difference to the embodiment depicted in Fig. 4, in the embodiment of Fig. 4a the determining mode is the (anti-correlated) transverse momentum mode.

From there on the photons 2 are transmitted through a dedicated lens and over a free-space transmission channel. The free-space transmission channels are pair-wise correlated, where each pair is configured to transmit an idler photon over one channel and the corresponding signal photon over the other channel of the pair. The photons transmitted via free-space channels can for example be received by a detector in a satellite if they are sent from a photon source placed on Earth or on another satellite, or they can be received by a detector on Earth if they are sent from a photon source place on Earth or on a satellite. As is demonstrated by this example, the invention is not limited to transmission of the photon pairs over separate, confined waveguides.

Fig. 5 shows yet another embodiment of the photon source 1, which implements the basic principle described in the context of Fig. 1. In this embodiment, the photon source also comprises an optical separation component 17. The optical separation component 17 has an intermodal dispersion and/or a polarization mode dispersion and splits the photon beam 2 into an idler beam and a signal beam before the coupling means 6 couple it to the optical interfaces 7, based on the respective spatial mode 5 of the photons. The interfaces 7 are indicated as waveguides. In this embodiment, the optical separation component 17 is a prism or a mirror and the coupling means 6 comprises coupling units 11 made up of lenses 12.

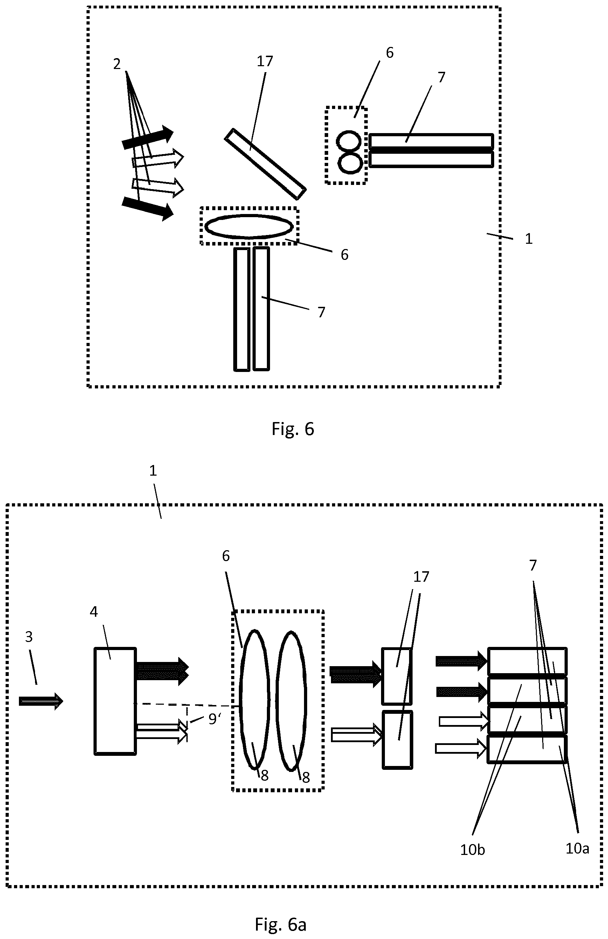

Fig. 6 shows yet another embodiment of the photon source 1, which implements the basic principle described in the context of Fig. 1. In this embodiment, the coupling means 6 consists of optical separation component 17, a polarization beam splitter (PBS) or a dichroic mirror (DM), wherein the photon beam 2 is split into a signal and an idler photon beam by the dichroic mirror if the signal and idler photons have non-equal wavelengths, or by the polarization beam splitter if the signal and idler photons have orthogonal polarization before they are coupled into the respective optical interfaces 7 by an additional coupling means 6. Thus, in the embodiments in Fig. 5 and 6 the photon beam 2 is split into multiple beams before reaching the additional coupling means 6. Such a separation upstream of the coupling means 6 may be based on the transverse spatial mode, the polarization mode, the transverse momentum mode and/or the temporal mode (e.g. the wavelength) of the photons 2. In any event, the coupling means 6 always distinguishes photos based on their transverse spatial mode or transverse momentum mode. In Fig. 6, the nonlinear crystal 4 and the pump laser 3 are not shown.

Fig. 6a shows an embodiment of the photon source 1, which implements (or realizes) the basic principle described in the context of Fig. 1. Herein, again the coupling means 6 couples photons 2 into the optical interfaces 7, which in this embodiment are made up by multiple transmission channels or paths (indicated as optical waveguides), preferably one for each mode. The distinguishing mode in this embodiment is the spatial mode, in particular the transverse position 9', i.e. the determination would be based on a correlated mode as well as an additional distinguishing feature (e.g. wavelength and/or polarization) that allows the photon pairs to be separated by means of the optical separation component 17. In this embodiment, the optical separation component 17 is placed after the first coupling means 6.

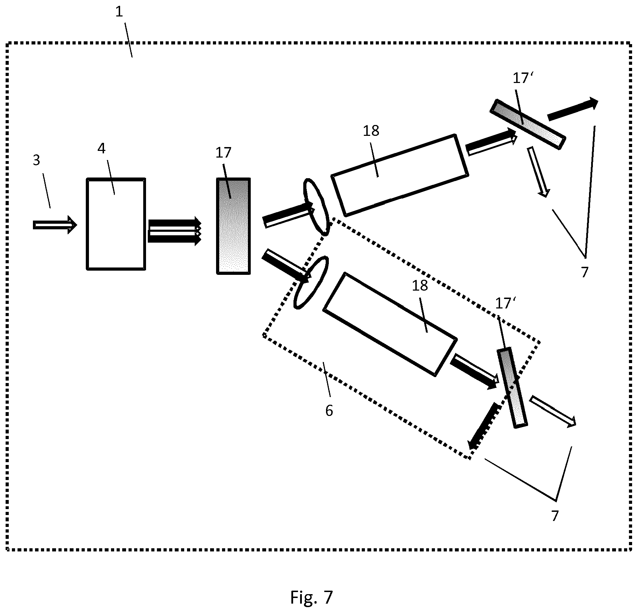

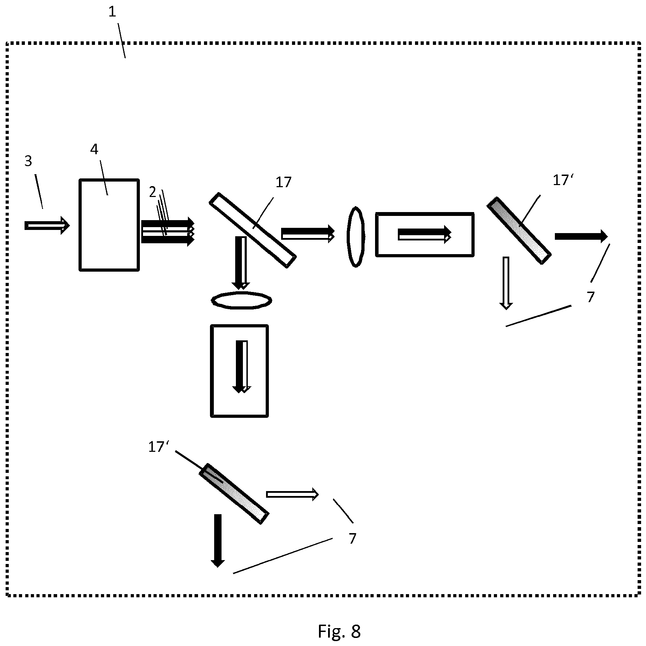

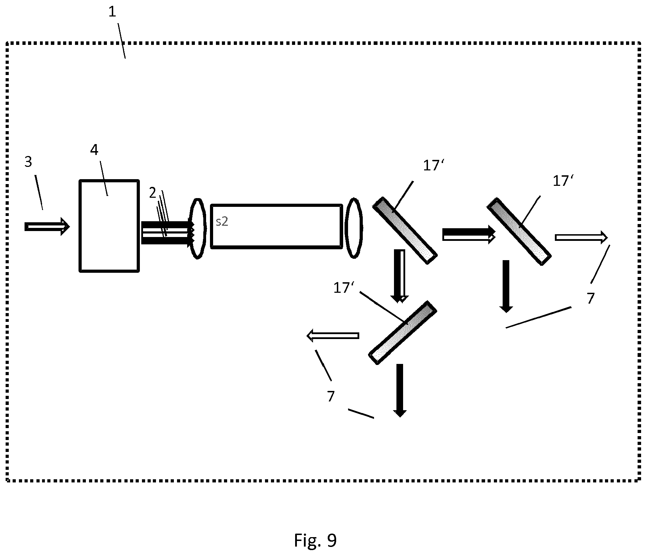

Fig. 7 shows yet another embodiment of the photon source 1, which implements the basic principle described in the context of Fig. 1. Herein, the signal and idler photons are emitted from the nonlinear crystal 4 into modes that have essentially the same emission angle. Thus, the signal and the idler photons can be distinguished by a mode that is not the emission angle 9, for instance the spatial phase profile (e.g. the orbital angular momentum) or the propagation path. First, the beam is split by a first coupling means 6, an optical separation component 17, i.e. it is mapped to different paths according to the polarization, spatial and/or momentum mode, e.g. by a first hologram. Then the photons on each path are coupled into a respective waveguide 18 (e.g. a multi-mode fiber), which preferably does not mix the polarization, spatial and/or momentum properties of the different photons 2. When the photons are emitted from the multi-mode fiber 18, they are again subjected to another coupling means 6, i.e. optical separation component 17', which maps different spatial modes into different paths. Those separate paths are the optical interfaces 7 of this embodiment; i.e. the coupling means 6 includes the three optical separation components 17, 17' as well as the two multi-mode waveguides 18. Thus, Fig. 7 (as well as Fig. 8 and 9) particularly shows a discrete mode picture.

Fig. 8 shows yet another embodiment of the photon source 1, which implements the basic principle described in the context of Fig. 1 and 7, wherein the first optical separation component 17 is a polarization beam splitter or a dichroic mirror as described in connection with Fig. 6.

Fig. 9 shows yet another embodiment of the photon source 1, which implements the basic principle described in the context of Fig. 1. Herein, the photons 2 emitted from the nonlinear crystal 4 are coupled by a lens into a single multi-mode fiber 18 that does not mix spatial, momentum and/or polarization properties of the photons 2. Downstream of the multi-mode fiber 18, the photons 2 are coupled by coupling means 6 comprising multiple optical separation components 17 that distinguish and separate the photons 2 according to their spatial, momentum and/or polarization mode, into the optical interfaces 7. As this example shows, the transmission of the photons between the nonlinear crystal 4 and the coupling means 6 can be over any suitable optical carrier (not necessarily a direct free-space link).

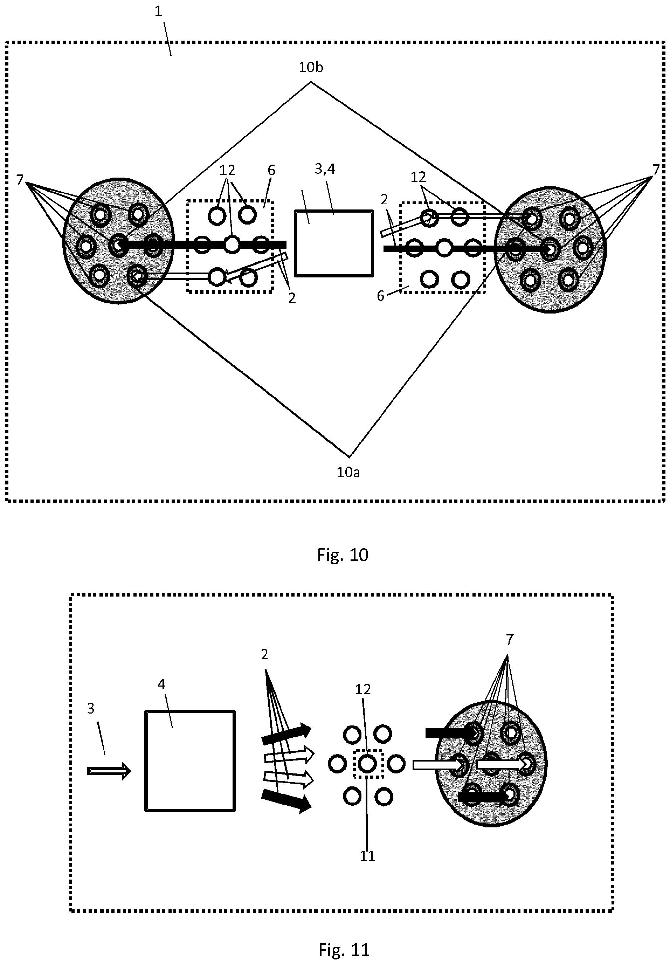

Fig. 10 shows yet another embodiment of the photon source 1, which implements the basic principle described in the context of Fig. 1. In Fig. 10, the pump laser 3 and the nonlinear crystal 4 are shown integrated in one component. In this embodiment, the coupling means 6 comprises two microlens arrays and the two members of a pair of entangled photons 2 generated by SPDC in the nonlinear crystal 4 are shown to leave the integrated component 3, 4 head-to-head. The optical interfaces 7 are grouped in pairs 10a, 10b and the coupling means 6 comprises coupling units 11 comprising one lens 12 each. The lenses 12 of the coupling units 11 associated with each of the two optical interfaces 7 of each pair 10a, 10b are arranged fixed in the respective microlens array symmetrically with respect to an optical axis 15 of the photon beam 2 emitted from the nonlinear crystal 4.

Fig. 11 shows yet another embodiment of the photon source 1, which implements the basic principle described in the context of Fig. 1 and 10. Herein, the lenses 12 of the coupling units 11 are gradient-index lenses and the optical interfaces 7 are the different cores of a tapered multi-core fiber. The cores are associated in pairs for transmitting entangled idler and signal photons. The additional central core (in total 7 cores) receives photons that have not been separated based on their spatial mode.

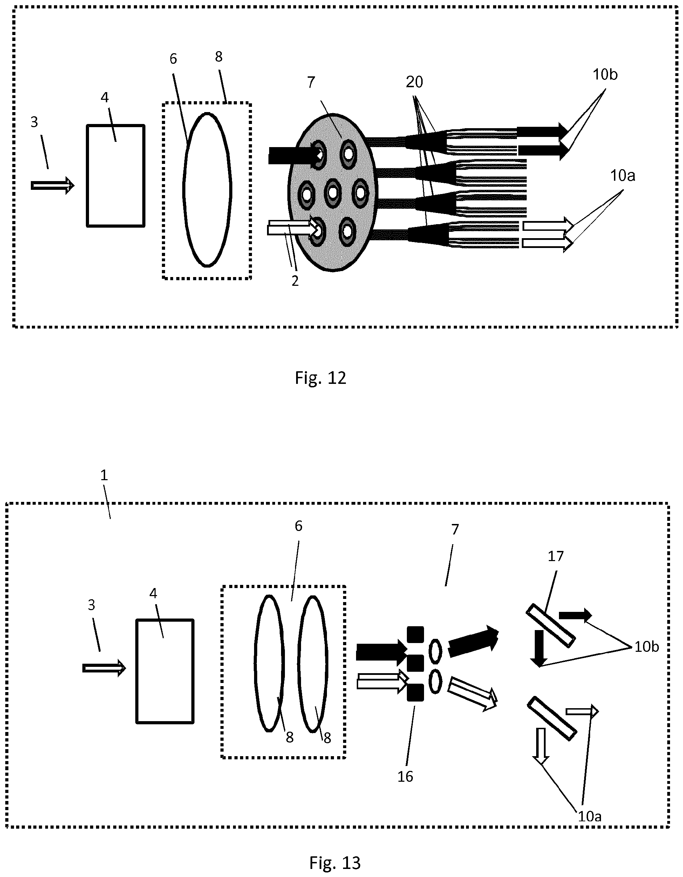

Fig. 12 shows yet another embodiment of the photon source 1, which implements the basic principle described in the context of the previous figures. However, in this figure, de-multiplexing is achieved using (transverse) spatial correlations and spectrally distinguishable photons 2 emitted from the nonlinear crystal 4. Firstly, the photons 2 are pairwise (correlatedly) mapped to a multi-core fibre. Secondly, photon pairs 2 are split according to their wavelength by a fiber-based wavelength division multi-plexer 20.

In this embodiment, the coupling means 6 comprises a single lens and the two members of a pair of entangled photons 2 generated by SPDC in the nonlinear crystal 4 shown to leave the integrated component 3, 4 head-to-head. In this embodiment, the lens 8 is positioned such that both photons 2 making up an entangled pair are coupled into the same optical fiber of a multi-core fiber assembly. The photons 2 are subsequently split into two or more fiber paths, using fiber-based wavelength division multiplexing.

Fig. 13 shows yet another embodiment of the photon source 1, which implements the basic principle described in the context of the previous figures. In this particular embodiment, the photons 2 are multiplexed according to spatial correlations, wherein the photons of a photon pair generated by SPDC are distinguishable by their spectral properties, in particular their wavelengths. The photons 2 are first pairwise (correlatedly) mapped on two pinholes 16 and afterwards are split into at least four channels by optical separation elements 17.

In this embodiment, the coupling means 6 comprises a telescope objective comprising two or more lenses and the two members of a pair of entangled photons 2 generated by SPDC in the nonlinear crystal 4 are shown to leave the integrated component 3, 4 head-to-head. In this embodiment, the lenses 8 are positioned such that both photons 2 making up an entangled pair are coupled into one of several optical interfaces 16 (here depicted as an array of pinholes). The photons 2 are subsequently split into two or more free-space propagation paths, using a dichroic mirror (17).

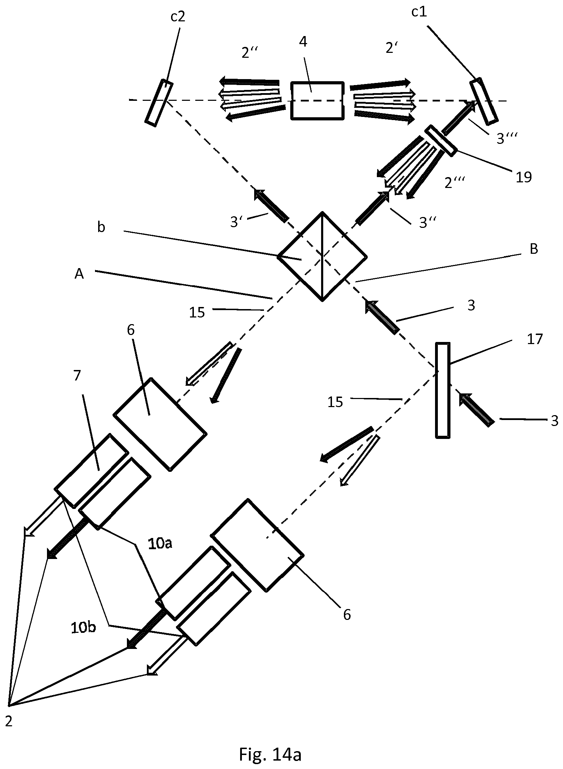

Fig. 14a shows yet another embodiment of the photon source 1, which implements the basic principle described in the context of the previous figures. Fig. 14a depicts an embodiment implementing a Sagnac loop, which allows a particularly high (in particular polarization) entanglement. It shows an example of a source of polarization entangled photons with auxiliary degrees of freedom, i.e. auxiliary (anti-)correlated modes. E.g. assuming that the pump laser beam 3 is a very loosely focused Gaussian beam, then the photons 2 will be correlated (or even entangled) in their transverse momentum mode (in particular in the emission angle) and in their spatial position in the crystal and correlated or anti-correlated in their spatial modes (in particular in terms of Laguerre-Gauss-modes or Hermite-Gauss-modes). The pump laser gets coupled into the system via a dichroic mirror 17, which splits the signal and the pump beam. A nonlinear crystal 4 is placed at the center of a polarization Sagnac loop, consisting of a polarizing beam splitter b (which could be equivalent to the optical separation element 17) and a device 19 for transforming the polarization to a polarization perpendicular to the original one, in particular e.g. a half-wave plate, twisted (i.e. cross-faced) periscope, or any other element for flipping a polarization for instance from |H> to |V>, which both work for pump, signal and idler photons.

The illustration of Fig. 14a depicts a type-II SPDC scheme, in which the crystal is oriented such, that, when pumped with a horizontally polarized pump laser pairs of entangled photons with orthogonal (e.g. |H>|V>) polarizations are produced over a multitude of transverse modes of clockwise propagating photon pairs (2') (e.g. |H>|V>) and of counter-clockwise propagating photon pairs (2") (e.g. |H>|V>). Polarization entanglement is generated in the following way: a diagonally polarized pump beam (3) is incident on the polarizing beam splitter b, which directs a horizontally polarized pump beam component (3') into the clockwise propagation direction inside a Sagnac loop and a vertically polarized pump component beam (3") into the counter-clockwise propagation direction inside the Sagnac loop.

The clockwise propagating pump beam component (3') can produce a pair of orthogonally polarized photons (e.g. |H>|V>) over a multitude of spatial modes (2'). The SPDC photons pass the half-wave plate (19) oriented at 45°, which flips the polarization of the down-converted photons. The polarizing beam splitter (b) then transmits the |H>-polarized photon into a PBS (b) output port A and reflects the |V>-polarized photon into the PBS (b) output port B. After the PBS (b), each of the photon beams is associated with its own optical axis (15) which denotes the propagation axis.

The vertically polarized pump component (3") is reflected into the counter-clockwise propagation direction of the Sagnac loop, and is flipped to |H> polarization, resulting in an |H>-polarized counter-clockwise propagating beam (3‴) such that it enters the nonlinear crystal 4 with its polarization parallel to the correct axis. For this pump beam, the SPDC process can produce a pair of photons in the counter-clockwise propagation direction (|H>|V>). Under correct axis is understood in particular the axis required for the nonlinear interaction to take place. The nonlinear crystal 4 will only down-convert pump photons 3 with a certain polarization to SPDC photons. For example, for a propagation along the crystallographic x-axis of a ppKTP (periodically poled potassium titanyl phosphate) crystal, the correct polarization for the pump beam photons can be either the crystallographic z-, or y-axis, depending on the phase-matching. In ppKTP crystals type-0 (S)PDC converts a pump photon polarized along the z-axis to a pair of z-axis-polarized (S)PDC photons, type-I converts a z-axis-polarized photon to a pair of y-axis-y-axis-polarized photons and type-II converts a y-axis-polarized pump photon to a y-axis-z-axis-polarized pair. The correct axis thus depends on the orientation of the crystal 4 and the type of phase matching. In the case described in this particular paragraph, the crystal is preferably assumed to be oriented such that the horizontal polarization of the pump photon coincides with the crystal's y-axis.

The superimposed state of the clockwise, and counter-clockwise pair-generation possibilities, after the PBS (b), then naturally factors into correlated spatial modes and a polarization-entangled state (e.g. |H>|V> + |V>|H>, omitting a normalization factor). This Sagnac scheme thus produces a maximally polarization-entangled state, without the need for additional compensation steps. The relative phase of the entangled state can be set by adjusting the relative phase of the pump polarization. The relative phase of the entangled state may be mode dependent.

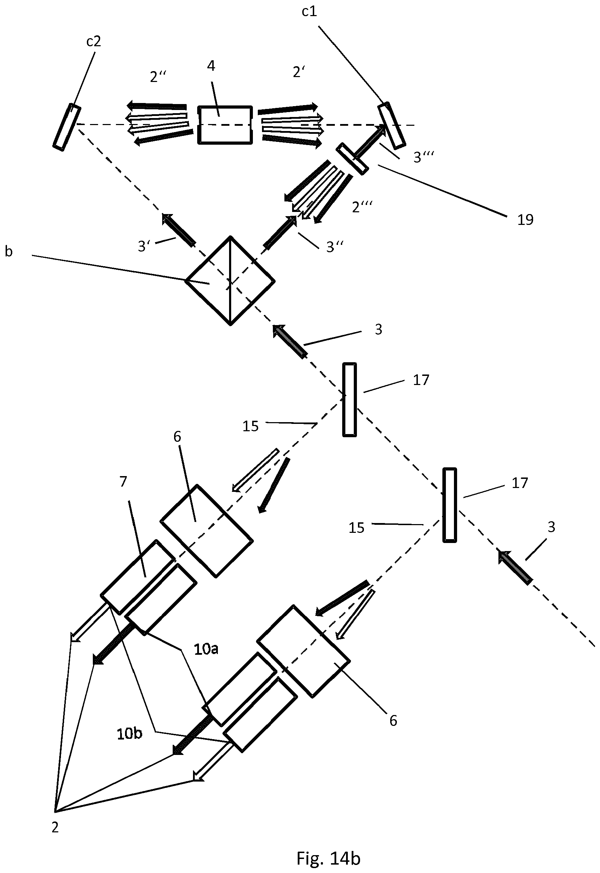

Fig. 14b shows another particularly preferable implementation of the polarization entanglement source. The Sagnac scheme can also be implemented with type-0 or type-1 nonlinear crystals, which produce co-polarized down-converted photon pairs (2). In this illustration, the crystal is oriented such that a horizontally polarized pump laser beam (3', 3''') comprises pairs of horizontally (|H>|H>) polarized photons (2'',2') in the clockwise (2') and counter-clockwise propagation direction (2''), and over a multitude of transverse modes. In analogy to the scheme described in the context of Fig. 14a, the photon pairs (2', 2''') propagating in the clockwise direction have their polarization flipped from |H>|H> (2') to |V>|V> (2''') by the device (19) or alternatively a cross-faced periscope. The now vertically polarized photons (2''') propagating in the clockwise direction are superimposed on the PBS (b) with the horizontally polarized photons (2'') propagating in the counter-clockwise direction, resulting in a polarization-entangled state (e.g. |H>|H> + |V>|V>). Contrary to the type-II configuration depicted in Fig. 14a, both counter-clockwise and clockwise SPDC emissions are emitted into the same output port of the PBS (b), and must be separated by means of another distinguishing property, e.g. via their wavelength using an additional dichroic mirror (17).

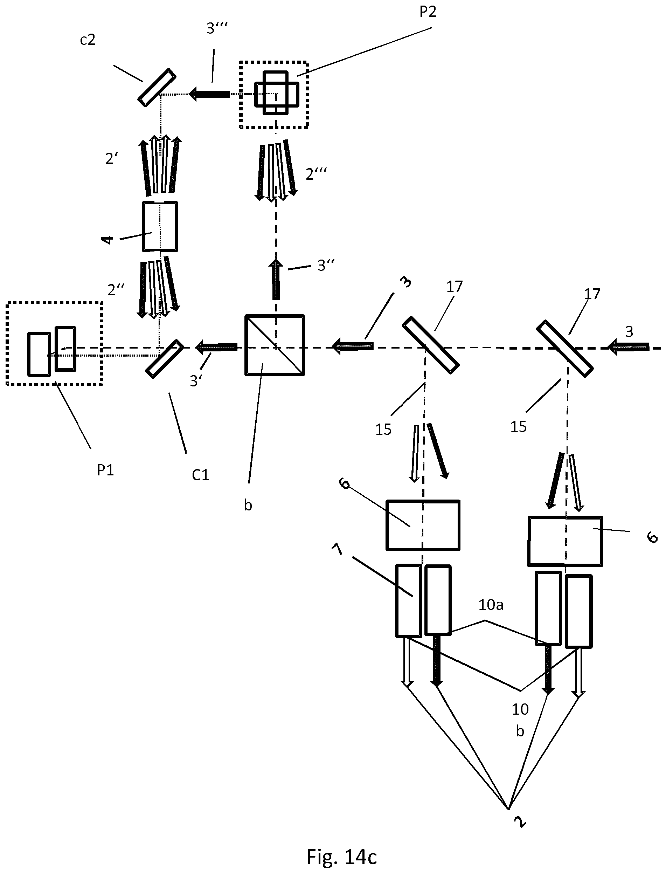

Fig. 14c depicts an even more preferable implementation of the polarization entanglement source. Herein, the Sagnac scheme implemented uses periscopes to achieve the desired polarization transformations. In this illustration, the nonlinear crystal 4 is oriented such that horizontally polarized pump laser beams (3', 3''') generate pairs of horizontally (|H>|H>) polarized photons (2'',2') in the clockwise (2') and counter-clockwise propagation direction (2''), and over a multitude of transverse modes. In this embodiment, the polarization transformation is achieved using a periscope (P1) and a twisted periscope (P2). In this case, the polarization transformation is introduced by flipping the coordinate system and is thus independent of the wavelength (up to a relative phase).

In analogy to the scheme described in Fig. 14b, the photon pairs (2') propagating in the clockwise direction have their polarization flipped to |V>|V>. The pump laser beam (3''') propagating in the counter-clockwise direction has its polarization transformed from |V> to |H> by the twisted periscope (P2). This embodiment of the polarization-entanglement source requires the nonlinear crystal 4 to be placed in a different plane than the PBS (b). The required displacement of the beam height is achieved using an additional periscope (P1). The mirrors c1 and c2 are also located in the plane of the nonlinear crystal. Periscope (P1) redirects the beam to the same level as the twisted periscope (P2), but transports the |V> and |H> polarizations unchanged (up to a possible relative phase). After the periscopes (P1, P2), the vertically polarized photons (2''') propagating in the clockwise direction are superimposed on the PBS (b) with the horizontally polarized photons (2'') propagating in the counter-clockwise direction, resulting in a maximally polarization-entangled state (e.g. |H>|H> + |V>|V>). The dashed and the dotted photon beams depicted are in different planes.

Fig. 15 illustrates the propagation of a transverse spatial mode and possible coordinate systems that can be used to define a position dependence of the amplitude in a transverse plane, or a transverse momentum distribution. A photon beam 2 propagates along an optical axis 15. The photon beam is described by a momentum distribution, where a particular momentum component from this distribution is indicated as 24. The momentum can be separated into a longitudinal component 21 along the optical axis 15 and a transverse momentum component 22 in a plane perpendicular to the optical axis. For a fixed longitudinal momentum component, the transverse momentum can also be expressed in terms of an emission angle 9 with respect to the axis 15. The transverse momentum distribution thus determines the spatial beam profile in the far field, that is, after a sufficient propagation distance in free space.

A transverse spatial mode of a photon beam may be described in terms of its transverse momentum distribution, or equivalently characteristic amplitude distribution 23 as a function of the transverse position 9' in a plane perpendicular to the optical axis 23'. The transverse momentum 22 and transverse position 9' may be related via a two-dimensional Fourier transform. This illustration depicts the characteristic intensity distribution of a transverse Hermite Gauss Mode (phase not depicted). Note that the spatial amplitude plane may be altered during free space propagation or via an imaging system (here depicted as a lens 8). In particular, a lens placed symmetrically between the planes 23' and 23", and with a focal length 25 corresponding to half the distance between the two planes (2-f system), relates the amplitudes in the respective planes via a Fourier transform; in this case, the amplitude distribution 23 as a function of the transverse position 9" in the plane 23" corresponds to the Fourier transform of the amplitude distribution 23 as a function of the transverse position 9' in the plane 23'. Hence the 2-f imaging system can be used to image the transverse momentum distribution 22 of a photon beam.

**Claims**

**1.** A method to provide entangled photon pairs comprising the steps of:

I) generation of entangled photon pairs in an entangled photon source by pumping a nonlinear crystal (4) with a pump laser (3) for parametric down-conversion, in particular spontaneous parametric down-conversion,

- whereas each entangled photon pair consist of two photons entangled in polarization and/or frequency and/or time, and whereby the two photons of each entangled photon pair are correlated in their spatial mode profile,

II) space-division de-multiplexing the photons of the entangled photon pairs with a coupling means (6), in order to separate the entangled photon pairs and in order to separate the two photons of an entangled photon pair,

- whereas the coupling means (6) assign by space-division de-multiplexing each photon of an entangled photon pair to a separate optical interface (7),
- whereas the coupling means (6) assign by space-division de-multiplexing each photon pair to a pair of optical interfaces (7)
- whereas the pair of optical interfaces (7) for an entangled photon pair forms a transmission channel between two receivers,

III) distribution of photons of the entangled photon pairs with at least four separate optical interfaces (7) in order to transmit the photons to at least two receivers,

- whereas at least two transmission channels are formed between at least two receivers.

**2.** Method according to claim 1,
whereas the coupling means (6) comprises

- one or more optical lens/es and/or mirror/s and/or lens array/s in order to reshape and/or redirect and/or focus photons (2) into the optical interfaces (7) by space-division de-multiplexing, and/or
- one or more optical separation components (17, 17') with an intermodal dispersion in the spatial mode and/or the momentum mode in order to reshape and/or redirect and/or focus photons photons (2) into the optical interfaces (7) by space-division de-multiplexing, preferably in combination with a wavelength mode dispersion, a temporal mode dispersion and/or a polarization mode dispersion, and/or
- one or more apertures or fibers in order to filter and/or redirect photons (2) into the optical interfaces (7) by space-division de-multiplexing, and/or
- one or more mode sorter/s and/or hologram/s in order to couple the photons into the optical interfaces (7) by constructive interference of the mode at a particular position or by diffraction, and/or
- one or more photonic lantern in order to couple the photons into the optical interfaces (7) by interference.

**3.** Method according to the claim 1 or 2,

whereas each optical interface (7)
comprises in a case of fiber communication

- a waveguide, and/or
- a single mode fiber, and/or
- one distinct single-mode cores of a multi-core fiber (MCF), and/or
- a propagation modes of a few-mode fiber (FMF), and/or
- a group of propagation modes of a few-mode fiber (FMF), and/or
- a propagation mode of a multi-mode fiber (MMF), and/or
- a group of propagation modes of a multi-mode fiber (MMF), and/or
- a coupled-core fiber, and/or
- a photonic bandgap fiber and/or

comprises in a case of free-space communication a free space propagation means like one or more of:

- a field-orthogonal transverse mode (e.g. OAM modes) and/or
- parallel displaced beam paths and/or
- beam paths propagating under different angles.

**4.** Method according to one of the claims 1 to 3,
whereas the space-division de-multiplexing assign the photons and the entangled photons pairs by the spatial mode and/or the momentum mode, in particular a transverse spatial mode and/or a transverse momentum mode, to the optical interfaces (7).

**5.** Method according to one of the claims 1 to 4,
whereas the space-division de-multiplexing assign the photons by the emission angle (9) of the photons (2) from the nonlinear crystal (4) and/or the position of the photons in a plane.

**6.** Method according to one of the claims 1 to 5,
whereas between the entangled photon source and the coupling means (6) a multi-mode fiber is arranged to transport photons with a spatial mode and/or the momentum mode, in particular a transverse spatial mode and/or a transverse momentum mode, to the coupling means (6).

**7.** Use of the method according to one of the claims 1 to 6,
**characterized in that** the photons (2) emitted from some or all of the separate optical interfaces (7) are used for quantum communication, preferably Quantum Key Distribution, wherein particularly preferably at least two users receive photons (2) from different optical interfaces (7) of the at least four separate optical interfaces (7).

**8.** Method according to one of the claims 1 to 7,
**characterized by** operating the pump laser (3) at conditions where a mean pair rate per pulse or per coincidence window of the entangle photons is above 0.1, in particular above 0.2, preferably up to 0.05, in particular above 0.1 per transmission channel.

**9.** Method according to one of the claims 1 to 8 for distributing a secure key to at least two receivers by means of Quantum Key Distribution.

**10.** A photon source (1) for generating entangled photon pairs and distribution of the photon pairs with space-division de-multiplexing comprising:

- a nonlinear crystal (4) and a pump laser (3) to pump the nonlinear crystal (4) for parametric down-conversion, in particular spontaneous parametric down-conversion, to generate entangled photons pairs entangled in polarization and/or frequency and/or time, and the two photons of each entangled photon pair are correlated in their spatial mode profile, and
- a coupling means (6) for space-division de-multiplexing of the entangled photon pairs and the photons of the entangled photon pair, and whereas the coupling means (6) assign by space-division de-multiplexing each photon of an entangled photon pair to a separate optical interface (7),
- at least four optical interfaces (7), whereas always two optical interfaces (7) forming a pair of interfaces forming a transmission channel between two receivers, whereas at least two transmission channels are arranged between at least two receivers.

**11.** Photon source according to claim 10,
whereas the coupling means (6) comprises

- one or more optical lens/es and/or mirror/s and/or lens array/s in order to reshape and/or redirect photons (2) into the optical interfaces (7) by space-division de-multiplexing, and/or
- one or more optical separation components (17, 17') with an intermodal dispersion in the spatial mode and/or the momentum mode in order to reshape and/or redirect photons (2) into the optical interfaces (7) by space-division de-multiplexing, preferably in combination with a wavelength mode dispersion, a temporal mode dispersion and/or a polarization mode dispersion, and/or
- one or more apertures or fibers in order to filter and/or redirect photons (2) into the optical interfaces (7) by space-division de-multiplexing, and/or
- one or more mode sorter/s and/or hologram/s in order to couple the photons into the optical interfaces (7) by constructive interference of the mode at a particular position or by diffraction, and/or
- one or more photonic lantern in order to couple the photons into the optical interfaces (7) by interference.

**12.** Photon source according to the claim 10 or 11,

whereas each optical interface (7) comprises in a case of fiber communication

- a waveguide, and/or
- a single mode fiber, and/or
- one distinct single-mode cores of a multi-core fiber (MCF), and/or
- a propagation mode of a few-mode fiber (FMF), and/or
- a group of propagation modes of a few-mode fiber (FMF), and/or
- a propagation mode of a multi-mode fiber (MMF), and/or
- a group of propagation modes of a multi-mode fiber (MMF), and/or
- a coupled-core fiber, and/or
- a photonic bandgap fiber and/or

comprises in a case of free-space communication a free space propagation means like one or more of:

- a field-orthogonal transverse mode (e.g. OAM modes) and/or
- parallel displaced beam paths and/or
- beam paths propagating under different angles

13. Photon source according to one of the claims 10 to 12,
whereas between the entangled photon source and the coupling means (6) a multi-mode fiber is arranged to transport photons with a spatial mode and/or the momentum mode, in particular a transverse spatial mode and/or a transverse momentum mode, to the coupling means (6).

14. Use of the Photon source according to one of the claims 10 to 13, **characterized in that** the photons (2) emitted from some or all of the separate optical interfaces (7) are used for quantum communication, preferably Quantum Key Distribution, wherein particularly preferably at least two users receive photons (2) from different optical interfaces (7) of the at least four separate optical interfaces (7).

## Patentansprüche

1. Verfahren zum Bereitstellen von verschränkten Photonenpaaren, das folgende Schritte umfasst:

I) Erzeugen von verschränkten Photonenpaaren in einer Quelle für verschränkte Photonen durch Pumpen eines nichtlinearen Kristalls (4) mit einem Pumplaser (3) für parametrische Fluoreszenz, insbesondere spontane parametrische Fluoreszenz,

- wobei jedes verschränkte Photonenpaar aus zwei Photonen besteht, die in der Polarisation und/oder der Frequenz und/oder der Zeit verschränkt sind, und wobei die beiden Photonen von jedem verschränkten Photonenpaar in ihrer räumlichen Mode korrelieren,

II) Raumdemultiplexen der Photonen der verschränkten Photonenpaare mit einem Kopplungsmittel (6), damit die verschränkten Photonenpaare getrennt werden und die beiden Photonen eines verschränkten Photonenpaars getrennt werden,

- wobei das Kopplungsmittel (6) jedes Photon eines verschränkten Photonenpaars mittels Raumdemultiplexen einer separaten optischen Schnittstelle (7) zuweisen,
- wobei das Kopplungsmittel (6) jedes Photonenpaar mittels Raumdemultiplexen einem Paar optischer Schnittstellen (7) zuweisen,
- wobei das Paar optischer Schnittstellen (7) für ein verschränktes Photonenpaar einen Übertragungskanal zwischen zwei Empfängern bildet,

III) Verteilen von Photonen der verschränkten Photonenpaare mit mindestens vier separaten optischen Schnittstellen (7) zur Übertragung der Photonen an mindestens zwei Empfänger,

- wobei zwischen mindestens zwei Empfängern mindestens zwei Übertragungskanäle gebildet werden.

2. Verfahren nach Anspruch 1,

wobei das Kopplungsmittel (6) Folgendes umfasst:

- eine oder mehrere optische Linse/n und/oder Spiegel und/oder Linsenanordnung/en zum Umformen und/oder Umlenken und/oder Bündeln von Photonen (2) in die optischen Schnittstellen (7) mittels Raumdemultiplexen, und/oder
- eine oder mehrere optische Trennkomponente/n (17, 17') mit einer Modendispersion in der Raummode und/oder der Impulsmode zum Umformen und/oder Umlenken und/oder Bündeln von Photonen (2) in die optischen Schnittstellen (7) mittels Raumdemultiplexen, vorzugsweise in Kombination mit einer Wellenlängenmodendispersion, einer Zeitmodendispersion und/oder einer Polarisationsmodendispersion, und/oder
- eine oder mehrere Blende/n oder Faser/n zum Filtern und/oder Umlenken von Photonen (2) in die optischen Schnittstellen (7) mittels Raumdemultiplexen, und/oder
- einen oder mehrere Modensortierer und/oder Hologramm/e zum Einkoppeln der Photonen in die optischen Schnittstellen (7) mittels konstruktiver Interferenz der Mode an einer bestimmten Stelle oder mittels Beugung, und/oder
- eine oder mehrere Photonic-Lantern-Vorrichtung/en zum Einkoppeln der Photonen in die optischen Schnittstellen (7) mittels Interferenz.

3. Verfahren nach Anspruch 1 oder 2,
wobei jede optische Schnittstelle (7) im Falle einer Faserkommunikation Folgendes umfasst:

- einen Wellenleiter und/oder
- eine Einmodenfaser und/oder
- einen einzelnen Einmodenkern einer Mehrkernfaser (multi-core fiber, MCF) und/oder
- eine Ausbreitungsmode einer Faser für wenige Moden (few-mode fiber, FMF) und/oder
- eine Gruppe von Ausbreitungsmoden einer Faser für wenige Moden (FMF) und/oder
- eine Ausbreitungsmode einer Multimodefaser (MMF) und/oder
- eine Gruppe von Ausbreitungsmoden einer Multimodefaser (MMF) und/oder
- eine Faser mit gekoppelten Kernen und/oder
- eine Faser mit photonischen Bandlücken und/oder im Fall einer Freiraumkommunikation ein Freiraum-Ausbreitungsmittel wie eins oder mehrere von Folgendem umfasst:
- eine zum Feld orthogonale Quermode (z.B. OAM-Moden) und/oder
- parallelverschobene Strahlengänge und/oder
- Strahlengänge, die sich unter verschiedenen Winkeln ausbreiten.

4. Verfahren nach einem der Ansprüche 1 bis 3,
wobei beim Raumdemultiplexen die Photonen und die verschränkten Photonenpaare den optischen Schnittstellen (7) durch die Raummode und/oder die Impulsmode, insbesondere eine räumliche Quermode und/oder eine Impulsquermode, zugewiesen werden.

5. Verfahren nach einem der Ansprüche 1 bis 4,
wobei beim Raumdemultiplexen die Photonen über den Emissionswinkel (9) der Photonen (2) aus dem nichtlinearen Kristall (4) und/oder die Lage der Photonen in einer Ebene zugewiesen werden.

6. Verfahren nach einem der Ansprüche 1 bis 5,
wobei zwischen der Quelle für verschränkte Photonen und dem Kopplungsmittel (6) eine Multimodefaser so angeordnet ist, dass sie Photonen mit einer Raummode und/oder der Impulsmode, insbesondere einer räumlichen Quermode und/oder einer Impulsquermode, zum Kopplungsmittel (6) transportiert.

7. Verwendung des Verfahrens nach einem der Ansprüche 1 bis 6,
**dadurch gekennzeichnet, dass** die Photonen (2), die von einigen oder allen separaten optischen Schnittstellen (7) emittiert werden, für Quantenkommunikation, vorzugsweise Quantenschlüsselaustausch, verwendet werden, wobei insbesondere vorzugsweise mindestens zwei Nutzer Photonen (2) von unterschiedlichen optischen Schnittstellen (7) von den mindestens vier separaten optischen Schnittstellen (7) empfangen.

8. Verfahren nach einem der Ansprüche 1 bis 7,
**dadurch gekennzeichnet, dass** der Pumplaser (3) unter Bedingungen betrieben wird, bei denen eine mittlere Paarrate pro Impuls oder pro Koinzidenzfenster der verschränkten Photonen über 0,1, insbesondere über 0,2, vorzugsweise bis zu 0,05, insbesondere über 0,1 pro Übertragungskanal beträgt.

9. Verfahren nach einem der Ansprüche 1 bis 8 zum Verteilen eines sicheren Schlüssels an mindestens zwei Empfänger mittels Quantenschlüsselaustausch.

10. Photonenquelle (1) zum Erzeugen von verschränkten Photonenpaaren und für die Verteilung der Photonenpaare mittels Raumdemultiplexen, umfassend:

- einen nichtlinearen Kristall (4) und einen Pumplaser (3) zum Pumpen des nichtlinearen Kristalls (4) für parametrische Fluoreszenz, insbesondere spontane parametrische Fluoreszenz, zum Erzeugen von verschränkten Photonenpaaren, die in der Polarisation und/oder der Frequenz und/oder der Zeit verschränkt sind und wobei die beiden Photonen von jedem verschränkten Photonenpaar in ihrer räumlichen Mode korrelieren, und
- ein Kopplungsmittel (6) zum Raumdemultiplexen der verschränkten Photonenpaare und der Photonen des verschränkten Photonenpaars, und wobei das Kopplungsmittel (6) jedes Photon eines verschränkten Photonenpaars mittels Raumdemultiplexen einer separaten optischen Schnittstelle (7) zuweisen,
- mindestens vier optische Schnittstellen (7), wobei stets zwei optische Schnittstellen (7) ein Paar Schnittstellen bilden, das einen Übertragungskanal zwischen zwei Empfängern bildet, wobei mindestens zwei Übertragungskanäle zwischen mindestens zwei Empfängern angeordnet sind.

11. Photonenquelle nach Anspruch 10,
wobei das Kopplungsmittel (6) Folgendes umfasst:

- eine oder mehrere optische Linse/n und/oder Spiegel und/oder Linsenanordnung/en zum Umformen und/oder Umlenken und/oder Bündeln von Photonen (2) in die optischen Schnittstellen (7) mittels Raumdemultiplexen, und/oder
- eine oder mehrere optische Trennkomponente/n (17, 17') mit einer Modendispersion in der Raummode und/oder der Impulsmode zum Umformen und/oder Umlenken von Photonen (2) in die optischen Schnittstellen (7) mittels Raumdemultiplexen, vorzugsweise in Kombination mit einer Wellenlängenmodendispersion, einer Zeitmodendispersion und/oder einer Polarisationsmodendispersion, und/oder
- eine oder mehrere Blende/n oder Faser/n zum Filtern und/oder Umlenken von Photonen (2) in die optischen Schnittstellen (7) mittels Raumdemultiplexen, und/oder
- einen oder mehrere Modensortierer und/oder Hologramm/e zum Einkoppeln der Photonen in die optischen Schnittstellen (7) mittels konstruktiver Interferenz der Mode an einer bestimmten Stelle oder mittels Beugung, und/oder
- eine oder mehrere Photonic-Lantern-Vorrichtung/en zum Einkoppeln der Photonen in die optischen Schnittstellen (7) mittels Interferenz.

12. Photonenquelle nach Anspruch 10 oder 11,
wobei jede optische Schnittstelle (7) im Falle einer Faserkommunikation Folgendes umfasst:

- einen Wellenleiter und/oder
- eine Einmodenfaser und/oder
- einen einzelnen Einmodenkern einer Mehrkernfaser (multi-core fiber, MCF) und/oder
- eine Ausbreitungsmode einer Faser für wenige Moden (few-mode fiber, FMF) und/oder
- eine Gruppe von Ausbreitungsmoden einer Faser für wenige Moden (FMF) und/oder
- eine Ausbreitungsmode einer Multimodefaser (MMF) und/oder
- eine Gruppe von Ausbreitungsmoden einer Multimodefaser (MMF) und/oder
- eine Faser mit gekoppelten Kernen und/oder
- eine Faser mit photonischen Bandlücken und/oder im Fall einer Freiraumkommunikation ein Freiraum-Ausbreitungsmittel wie eins oder mehrere von Folgendem umfasst:
- eine zum Feld orthogonale Quermode (z.B. OAM-Moden) und/oder
- parallelverschobene Strahlengänge und/oder
- Strahlengänge, die sich unter verschiedenen Winkeln ausbreiten.

13. Photonenquelle nach einem der Ansprüche 10 bis 12,
wobei zwischen der Quelle für verschränkte Photonen und dem Kopplungsmittel (6) eine Multimodefaser so angeordnet ist, dass sie Photonen mit einer Raummode und/oder der Impulsmode, insbesondere einer räumlichen Quermode und/oder einer Impulsquermode, zum Kopplungsmittel (6) transportiert.

14. Verwendung der Photonenquelle nach einem der Ansprüche 10 bis 13,

**dadurch gekennzeichnet, dass** die Photonen (2), die von einigen oder allen separaten optischen Schnittstellen (7) emittiert werden, für Quantenkommunikation, vorzugsweise Quantenschlüsselaustausch, verwendet werden, wobei insbesondere vorzugsweise mindestens zwei Nutzer Photonen (2) von unterschiedlichen optischen Schnittstellen (7) von den mindestens vier separaten optischen Schnittstellen (7) empfangen.

## Revendications

1. Une méthode pour fournir des paires de photons enchevêtrés, comprenant les étapes de :

   I) générer des paires de photons enchevêtrés dans une source de photons enchevêtrés, par le pompage d'un cristal non linéaire (4) au moyen d'un laser de pompage (3) pour une conversion par abaissement paramétrique, en particulier une conversion par abaissement paramétrique spontanée ;

   - dans laquelle chaque paire de photons enchevêtrés est constituée de deux photons enchevêtrés en polarisation et/ou en fréquence et/ou en temps, et moyennant quoi les deux photons de chaque paire de photons enchevêtrés sont corrélés dans leur profil de mode spatial ;

   II) démultiplexer par répartition dans l'espace les photons des paires de photons enchevêtrés avec un moyen de couplage (6), afin de séparer les paires de photons enchevêtrés et afin de séparer les deux photons d'une paire de photons enchevêtrés ;

   - dans laquelle le moyen de couplage (6) affecte, par démultiplexage par répartition dans l'espace, chaque photon d'une paire de photons enchevêtrés, à une interface optique distincte (7) ;
   - dans laquelle le moyen de couplage (6) affecte, par démultiplexage par répartition dans l'espace, chaque paire de photons, à une paire d'interfaces optiques (7) ;
   - dans laquelle la paire d'interfaces optiques (7) pour une paire de photons enchevêtrés forme un canal de transmission entre deux récepteurs ;

   III) répartir des photons des paires de photons enchevêtrés avec au moins quatre interfaces optiques (7) distinctes afin de transmettre les photons à au moins deux récepteurs ;

   - dans laquelle au moins deux canaux de transmission sont formés entre au moins deux récepteurs.

2. Méthode selon la revendication 1,
   dans laquelle le moyen de couplage (6) comprend :

   - un(e) ou plusieurs lentille(s) optique(s) et/ou miroir(s) et/ou réseau(x) de lentilles afin de remodeler et/ou rediriger et/ou focaliser des photons (2) dans les interfaces optiques (7), par démultiplexage par répartition dans l'espace ; et/ou
   - un ou plusieurs composants de séparation optique (17, 17') avec une dispersion intermodale dans le mode spatial et/ou le mode de quantité de mouvement afin de remodeler et/ou rediriger et/ou focaliser des photons (2) dans les interfaces optiques (7), par démultiplexage par répartition dans l'espace, de préférence en combinaison avec une dispersion de mode de longueur d'onde, une dispersion de mode temporel et/ou une dispersion de mode de polarisation ; et/ou
   - une ou plusieurs ouvertures ou fibres afin de filtrer et/ou de rediriger des photons (2) dans les interfaces optiques (7) par démultiplexage par répartition dans l'espace ; et/ou
   - un ou plusieurs trieurs de mode et/ou hologramme(s) afin de coupler les photons dans les interfaces optiques (7), par interférence constructive du mode à une position particulière, ou par diffraction ; et/ou
   - une ou plusieurs lanternes photoniques afin de coupler les photons dans les interfaces optiques (7) par interférence.

3. Méthode selon la revendication 1 ou 2,

   dans laquelle chaque interface optique (7)
   comprend, dans le cas d'une communication par fibre :

   - un guide d'ondes ; et/ou

- une fibre monomode ; et/ou
- un cœur monomode distinct d'une fibre multicœur (MCF) ; et/ou
- un mode de propagation d'une fibre à quelques modes (FMF) ; et/ou
- un groupe de modes de propagation d'une fibre à quelques modes (FMF) ; et/ou
- un mode de propagation d'une fibre multimode (MMF) ; et/ou
- un groupe de modes de propagation d'une fibre multimode (MMF) ; et/ou
- une fibre à cœur couplé ; et/ou
- une fibre à bande interdite photonique ; et/ou

comprend, dans le cas d'une communication en espace libre, un moyen de propagation en espace libre tel qu'un ou plusieurs éléments parmi :

- un mode transversal orthogonal au champ (par exemple, des modes OAM) ; et/ou
- des trajets de faisceau déplacés parallèles ; et/ou
- des trajets de faisceau se propageant sous des angles différents.

**4.** Méthode selon l'une quelconque des revendications 1 à 3,
dans laquelle démultiplexage par répartition dans l'espace affecte les photons et les paires de photons enchevêtrés, par le mode spatial et/ou le mode de quantité de mouvement, en particulier un mode spatial transversal et/ou un mode de quantité de mouvement transversal, aux interfaces optiques (7).

**5.** Méthode selon l'une quelconque des revendications 1 à 4,
dans laquelle le démultiplexage par répartition dans l'espace affecte les photons, par l'angle d'émission (9) des photons (2) à partir du cristal non linéaire (4) et/ou la position des photons dans un plan.

**6.** Méthode selon l'une quelconque des revendications 1 à 5,
dans laquelle, entre la source de photons enchevêtrés et le moyen de couplage (6), une fibre multimode est agencée de manière à transporter des photons avec un mode spatial et/ou le mode de quantité de mouvement, en particulier un mode spatial transversal et/ou un mode de quantité de mouvement transversal, vers le moyen de couplage (6).

**7.** Utilisation de la méthode selon l'une quelconque des revendications 1 à 6, **caractérisée en ce que** les photons (2) émis par tout ou partie des interfaces optiques distinctes (7) sont utilisés pour une communication quantique, de préférence une cryptographie quantique, dans laquelle, de manière particulièrement préférée, au moins deux utilisateurs reçoivent des photons (2) provenant de différentes interfaces optiques (7) desdites au moins quatre interfaces optiques distinctes (7).

**8.** Méthode selon l'une quelconque des revendications 1 à 7,
**caractérisée par** l'exploitation du laser de pompage (3) dans des conditions où un taux de paires moyen par impulsion ou par fenêtre de coïncidence des photons enchevêtrés est supérieur à 0,1, en particulier supérieur à 0,2, atteint de préférence 0,05, en particulier supérieur à 0,1 par canal de transmission.

**9.** Méthode selon l'une quelconque des revendications 1 à 8, pour distribuer une clé sécurisée à au moins deux récepteurs au moyen d'une cryptographie quantique.

**10.** Une source de photons (1) pour générer des paires de photons enchevêtrés et pour une répartition des paires de photons avec un démultiplexage par répartition dans l'espace, comprenant :

- un cristal non linéaire (4), et un laser de pompage (3) pour pomper le cristal non linéaire (4) en vue d'une conversion par abaissement paramétrique, en particulier une conversion par abaissement paramétrique spontanée, pour générer des paires de photons enchevêtrés en polarisation et/ou en fréquence et/ou en temps, et dans lesquels les deux photons de chaque paire de photons enchevêtrés sont corrélés dans leur profil de mode spatial ; et
- un moyen de couplage (6) pour un démultiplexage par répartition dans l'espace des paires de photons enchevêtrés et des photons de la paire de photons enchevêtrés, et dans lequel le moyen de couplage (6) affecte, par démultiplexage par répartition dans l'espace, chaque photon d'une paire de photons enchevêtrés à une interface optique distincte (7) ;
- au moins quatre interfaces optiques (7), dans lesquelles, dans tous les cas, deux interfaces optiques (7) formant une paire d'interfaces forment un canal de transmission entre deux récepteurs, dans lesquels au moins deux canaux de transmission sont agencés entre au moins deux récepteurs.

11. Source de photons selon la revendication 10,
   dans laquelle le moyen de couplage (6) comprend :

   - un(e) ou plusieurs lentille(s) optique(s) et/ou miroir(s) et/ou réseau(x) de lentilles afin de remodeler et/ou rediriger des photons (2) dans les interfaces optiques (7), par démultiplexage par répartition dans l'espace ; et/ou
   - un ou plusieurs composants de séparation optique (17, 17') avec une dispersion intermodale dans le mode spatial et/ou le mode de quantité de mouvement afin de remodeler et/ou rediriger des photons (2) dans les interfaces optiques (7), par démultiplexage par répartition dans l'espace, de préférence en combinaison avec une dispersion de mode de longueur d'onde, une dispersion de mode temporel et/ou une dispersion de mode de polarisation ; et/ou
   - une ou plusieurs ouvertures ou fibres afin de filtrer et/ou de rediriger des photons (2) dans les interfaces optiques (7) par démultiplexage par répartition dans l'espace ; et/ou
   - un ou plusieurs trieurs de mode et/ou hologramme(s) afin de coupler les photons dans les interfaces optiques (7), par interférence constructive du mode à une position particulière, ou par diffraction ; et/ou
   - une ou plusieurs lanternes photoniques afin de coupler les photons dans les interfaces optiques (7) par interférence.

12. Source de photons selon la revendication 10 ou 11,

   dans laquelle chaque interface optique (7)
   comprend, dans le cas d'une communication par fibre :

      - un guide d'ondes ; et/ou
      - une fibre monomode ; et/ou
      - un cœur monomode distinct d'une fibre multicœur (MCF) ; et/ou
      - un mode de propagation d'une fibre à quelques modes (FMF) ; et/ou
      - un groupe de modes de propagation d'une fibre à quelques modes (FMF) ; et/ou
      - un mode de propagation d'une fibre multimode (MMF) ; et/ou
      - un groupe de modes de propagation d'une fibre multimode (MMF) ; et/ou
      - une fibre à cœur couplé ; et/ou
      - une fibre à bande interdite photonique ; et/ou

   comprend, dans le cas d'une communication en espace libre, un moyen de propagation en espace libre tel qu'un ou plusieurs éléments parmi :

      - un mode transversal orthogonal au champ (par exemple, des modes OAM) ; et/ou
      - des trajets de faisceau déplacés parallèles ; et/ou
      - des trajets de faisceau se propageant sous des angles différents.

13. Source de photons selon l'une quelconque des revendications 10 à 12, dans laquelle, entre la source de photons enchevêtrés et le moyen de couplage (6), une fibre multimode est agencée de manière à transporter des photons avec un mode spatial et/ou le mode de quantité de mouvement, en particulier un mode spatial transversal et/ou un mode de quantité de mouvement transversal, vers le moyen de couplage (6).

14. Utilisation de la source de photons selon l'une quelconque des revendications 10 à 13, **caractérisée en ce que** les photons (2) émis par tout ou partie des interfaces optiques distinctes (7) sont utilisés pour une communication quantique, de préférence une cryptographie quantique, dans laquelle, de manière particulièrement préférée, au moins deux utilisateurs reçoivent des photons (2) provenant de différentes interfaces optiques (7) desdites au moins quatre interfaces optiques distinctes (7).

Fig. 1

Fig. 2

Fig. 2a

Fig. 3

Fig. 3a

Fig. 4

Fig. 4a

Fig. 5

Fig. 6

Fig. 6a

Fig. 7

Fig. 8

Fig. 9

Fig. 10

Fig. 11

Fig. 12

Fig. 13

Fig. 14a

Fig. 14b

Fig. 14c

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6430345 B1
- WO 2016168920 A1
- US 20140099104 A1

**Non-patent literature cited in the description**

- **J. TRAPATEAU et al.** Multi-user distribution of polarization entangled photon pairs. *arXiv:1510.06666v1,* 2015
- **H. J. LEE.** *Experimental Demonstration of Four-Dimensional Photonic Spatial Entanglement between Multi-core Optical Fibres,* 2017